# EUROPÄISCHE PATENTANMELDUNG

(11) **EP 2 371 251 A1**
(43) Veröffentlichungstag der Anmeldung: **05.10.2011**
(21) Anmeldenummer: 11160177.9
(22) Anmeldetag: 29.03.2011
(51) Int. Cl.: A47J 43/046

(54) **Elektromotorisch betriebene Küchenmaschine, sowie Zubereitungsgefäß**

(30) Priorität: 31.03.2010 DE 102010016249; 06.05.2010 DE 102010016815; 19.01.2011 DE 102011000219
(71) Anmelder: Vorwerk & Co. Interholding GmbH, 42275 Wuppertal (DE)
(72) Erfinder: Arnold, Hans-Peter, 58566, Kierspe (DE); Brech, Oliver, 44532, Lünen (DE); Günay, Ridvan, 42105, Wuppertal (DE); Braun, Thomas, 42327, Wuppertal (DE); Heider, Uwe, 50354, Hürth (DE); Weber, Klaus-Martin, 42109, Wuppertal (DE); Starfinger, Frank, 44793, Bochum (DE); Lang, Torsten, 42657, Solingen (DE)
(74) Vertreter: Müller, Enno

(57) **Zusammenfassung**

Die Erfindung betrifft zunächst eine elektromotorisch betriebene Küchenmaschine (1) mit einem Rührgefäß (7), das durch einen Deckel (9) verschließbar ist, wobei der Deckel (9) bei Betrieb der Küchenmaschine (1) relativ zu dem Rührgefäß (7) gegen Entfernen verriegelt ist, wobei weiter zwischen dem Deckel (9) und einem zugeordneten Öffnungsrand (12) des Rührgefäßes (7) bevorzugt eine Dichtung (16) angeordnet ist. Weiter betrifft die Erfindung ein Zubereitungsgefäß, bspw. zum Kochen, Garen oder Dampfgaren von Speisen, das durch einen Deckel verschließbar ist, wobei der Deckel bei Benutzung relativ zu dem Zubereitungsgefäß gegen Entfernen verriegelt ist, wobei weiter zwischen dem Deckel und einem zugeordneten Öffnungsrand des Zubereitungsgefäßes bevorzugt eine Dichtung angeordnet ist. Um eine Küchenmaschine oder ein Zubereitungsgefäß der in Rede stehenden Art insbesondere hinsichtlich der Deckelverriegelung weiter zu verbessern, wird vorgeschlagen, dass der Deckel (9) durch ein oder mehrere bewegbare Riegelelemente (22) verriegelbar ist, wobei die Riegelelemente (22) in einem an dem Deckel (9) oder an dem Rührgefäß ausgebildeten Hintergriff (14) eingreifen und die Bewegung der Riegelelemente (22) durch einen an der Küchenmaschine (1) vorgesehenen Antrieb bewirkbar ist, der außerhalb des Rührgefäßes angeordnet ist.

## Beschreibung

Die Erfindung betrifft zunächst eine elektromotorisch betriebene Küchenmaschine mit einem Rührgefäß, das durch einen Deckel verschließbar ist, wobei der Deckel bei Betrieb der Küchenmaschine relativ zu dem Rührgefäß gegen Entfernen verriegelt ist, wobei weiter zwischen dem Deckel und einem zugeordneten Öffnungsrand des Rührgefäßes bevorzugt eine Dichtung angeordnet ist.

Küchenmaschinen der in Rede stehenden Art sind bekannt. Diese dienen insbesondere im Haushaltsbereich der Vorbereitung oder Zubereitung von Speisen, wozu in dem Rührgefäß ein elektromotorisch antreibbares Rührwerk vorgesehen ist. Der Antrieb des Rührwerks ist hierbei in der Küchenmaschine vorgesehen, wozu das Rührgefäß bodenseitig eine entsprechende Kopplungsausformung aufweist. Zur Nutzung ist das Rührgefäß entsprechend in eine Rührgefäßaufnahme der Küchenmaschine einzusetzen, womit einhergehend eine kraftschlüssige Kupplung zwischen dem Antrieb und dem Rührwerk erreicht ist. Derartige Rührgefäße sind weiter insbesondere im Betrieb deckelverschließbar, welche Deckelverschlussstellung derart verriegelt ist, dass während des Betriebs, insbesondere während des Rührwerkbetriebs ein Entfernen des Deckels unterbunden ist. Um ein Austreten von in dem Rührgefäß befindlichen, ggf. über das Rührwerk in Bewegung versetzten Speisen oder dergleichen zu verhindern ist es weiter bekannt, eine Dichtung vorzusehen, die am Deckel befestigt ist und gegen den Öffnungsrand des Rührgefäßes wirkt. Weiter sind in diesem Zusammenhang Küchenmaschinen bekannt, bei welchen das Rührgefäß bzw. das in dem Rührgefäß befindliche Medium unmittelbar oder mittelbar beheizt wird, wozu bspw. bodenseitig des Rührgefäßes eine elektrische Widerstandsheizung vorgesehen ist.

Weiter wird bspw. auf die EP 0 861 626 B1 verwiesen. Aus dieser Patentschrift ist eine Küchenmaschine der in Rede stehenden Art bekannt, bei welcher der Deckel zufolge einer Drehsicherung an dem Rührgefäß verriegelbar ist. Hierzu ist rührgefäßseitig ein durch den Benutzer zu betätigender Schwenkhebel vorgesehen, der mit einem dem Deckel zugewandten Abschnitt zur Verriegelung des Deckels in eine zugeordnete Deckelnut einfährt. Diesem Verriegelungsbereich gegenüberliegend hintergreift der Deckel einen Rührgefäßabschnitt. Der bspw. daumenbetätigbare Schwenkhebel bzw. dessen Sperrabschnitt schwenkt im Zuge der Betätigung um eine nahezu vertikale Achse des Rührgefäßes bzw. um eine in einem spitzen Winkel zur Vertikalachse verlaufenden Achse. Weiter ist aus der EP 1 269 898 A1 eine Ausbildung bekannt, bei welcher der Deckel im auf dem Rührgefäß aufgelegten Zustand zusammen mit dem Rührgefäß in der Rührgefäßaufnahme der Küchenmaschine um die Mittelachse des Rührgefäßes geschwenkt wird, wobei im Zuge dieser Schwenkverlagerung an dem Deckel vorgesehene, radial nach außen vorragende Radialvorsprünge in zugeordnete Aufnahmen eines Gehäuseabschnittes der Küchenmaschine eingreifen und so den Deckel gegen Entfernen verriegeln.

Die Erfindung betrifft weiter ein Zubereitungsgefäß, bspw. zum Kochen, Garen oder Dampfgaren von Speisen, das durch einen Deckel verschließbar ist, wobei der Deckel bei Benutzung relativ zu dem Zubereitungsgefäß gegen Entfernen verriegelt ist, wobei weiter zwischen dem Deckel und einem zugeordneten Öffnungsrand des Zubereitungsgefäßes bevorzugt eine Dichtung angeordnet ist.

Zubereitungsgefäße der in Rede stehenden Art sind bekannt, so bspw. in Form deckelverschließbarer Kochgefäße, weiter bspw. zum Einsatz in Großküchen, oder bspw. in Form von Druckkochtöpfen, bei welchen zum Aufbau eines Innendrucks der Deckel unter dichtender Anlage an dem Öffnungsrand des Topfes zu Folge Verriegelung, insbesondere Bajonett-Verriegelung an dem Topf festgelegt ist.

Im Hinblick auf den vorbeschriebenen Stand der Technik wird eine technische Problematik der Erfindung darin gesehen, eine Küchenmaschine der in Rede stehenden Art insbesondere hinsichtlich der Deckelverriegelung weiter zu verbessern. Weiter stellt sich die Problematik ein Zubereitungsgefäß hinsichtlich der Deckelverriegelung weiter zu verbessern.

Diese Problematik ist zunächst und im Wesentlichen bezüglich einer Küchenmaschine durch den Gegenstand des Anspruches 1 gelöst, wobei darauf abgestellt ist, dass der Deckel durch ein oder mehrere bewegbare Riegelelemente verriegelbar ist, wobei die Riegelelemente in einem, an dem Deckel oder an dem Rührgefäß ausgebildeten Hintergriff eingreifen und die Bewegung der Riegelelemente durch einen an der Küchenmaschine vorgesehenen Antrieb bewirkbar ist, der außerhalb des Rührgefäßes angeordnet ist. Hinsichtlich des Zubereitungsgefäßes ist diese Problematik zunächst und im Wesentlichen durch den Gegenstand des Anspruches 2 gelöst, wobei darauf abgestellt ist, dass der Deckel durch ein oder mehrere bewegbare Riegelelemente verriegelbar ist, wobei die Riegelelemente in einem, an dem Deckel oder an dem Zubereitungsgefäß ausgebildeten Hintergriff eingreifen und die Bewegung der Riegelelemente durch einen Antrieb bewirkbar ist, der außerhalb des Zubereitungsgefäßes angeordnet ist. Zufolge dieser Ausgestaltung ist in handhabungstechnisch günstiger Weise eine Verriegelung des Deckels am Gefäß erreichbar, wobei das Gefäß, wie auch im weiteren Text, entweder ein Rührgefäß für eine Küchenmaschine oder ein Zubereitungsgefäß ist. Die Bewegung des oder der Riegelelemente in die Verriegelungsstellung bzw. zur Aufhebung der Verriegelungsstellung in die entgegengesetzte Richtung wird bevorzugt geräteseitig durch einen Antrieb herbeigeführt und ausgelöst, wobei weiter im Falle einer Küchenmaschine insbesondere die Verriegelung des Deckels bspw. infolge des Einsetzens des Rührgefäßes in eine entsprechend ausgebildete Rührgefäßaufnahme der Küchenmaschine selbsttätig erfolgt, wozu weiter bspw. entsprechende Detektierungsmittel vorgesehen sind, die das eingesetzte Rührgefäß erfassen. Bevorzugt wird diesbezüglich weiter, dass die Deckelverriegelung im eingesetzten Zustand des Rührgefäßes bspw. zufolge einer Tastenbetätigung durch den Benutzer herbeigeführt wird, woraufhin ein maschinenseitiger Antrieb außerhalb des Rührgefäßes, entsprechend bevorzugt innerhalb der bevorzugt als Tischgerät ausgebildeten Küchenmaschine zur Bewegung des oder der Riegelelemente ausgelöst wird. Im Falle eines Zubereitungsgefäßes kann dieses in eine entsprechend angepasste Aufnahme eines, den Antrieb aufweisenden, Grundgerätes eingesetzt sein. Bezüglich des Antriebs handelt es sich bevorzugt um einen elektromotorischen Antrieb, bspw. in Form eines linear verlagerbaren, ggf. unter Zwischenschaltung eines Getriebes durch den Antrieb beaufschlagbaren Kolbens oder dergleichen. Alternativ ist auch eine elektromagnetische Antriebsausgestaltung diesbezüglich möglich, bspw. in Form eines Hubmagneten. Bevorzugt wird sowohl die Verriegelungsstellung als auch die Entriegelungsstellung des oder der Riegelelemente zufolge entsprechender Aktivierung bzw. Deaktivierung des Antriebs herbeigeführt. So ist entsprechend weiter bevorzugt eine Verriegelung des Deckels an dem Öffnungsrand des Gefäßes nur im in die Aufnahme der Küchenmaschine bzw. des Grundgerätes eingesetzten Zustand des Gefäßes ermöglicht, da bevorzugt nur in dieser Position über den maschinenseitigen Antrieb eine Radialverlagerung des oder der Riegelelemente in die Verriegelungsstellung des Deckels möglich ist.

Insbesondere mit Bezug auf einen vertikalen Querschnitt durch den Zusammenwirkungsbereich von Deckel und Gefäß, insbesondere von Deckel und Öffnungsrand des Gefäßes vollzieht jedes Riegelelement im Zuge der Verriegelung wie auch weiter bevorzugt im Zuge der Entriegelung eine Linearbewegung in Radialrichtung (mit Bezug auf eine Mittelachse des Gefäßes). Der oder die Riegelelemente sind in bevorzugter Ausgestaltung an dem Gefäß vorgesehen, zur Zusammenwirkung mit einem am Deckel ausgebildeten Hintergriff. Bevorzugt ist auch eine Anordnung des oder der Riegelelemente am Deckel, wobei in diesem Fall eine Zusammenwirkung mit einem gefäßseitigen Hintergriff vorgesehen ist. Sind die Riegelelemente deckelseitig angeordnet, so erfolgt weiter bevorzugt die Betätigung derselben über geräteseitige Hilfsmittel, weiter bevorzugt über Hilfsmittel, die geräteseitig ausgebildet sind. Der von dem oder den Riegelelementen zu hintergreifende Hintergriff des Deckels oder des Gefäßes ist weiter bevorzugt so ausgebildet, dass der Deckel insbesondere gegen ein axiales An- bzw. Abheben gesichert ist, weiter bevorzugt derart, dass die Riegelelemente den axialen Verlagerungsweg des den Hintergriff aufweisenden Abschnitts insbesondere des Deckels sperren. Bevorzugt sind die Riegelelemente an mindestens zwei umfangsmäßig beabstandeten Bereichen vorgesehen, so dass eine entsprechende Sperrung an diesen mindestens zwei Bereichen erreicht ist.

Die vorbeschriebene Lösung bietet sich insbesondere bei einem Deckel für ein, einer Küchenmaschine zuordbares Rührgefäß an, ist darüber hinaus jedoch auch anwendbar bei deckelartig auf dem Rührgefäß aufzusetzenden Zubehörteilen für das Rührgefäß, welche Zubehörteile unmittelbar oder unter Zwischenschaltung des Deckels an dem Rührgefäß festsetzbar sind. So bietet sich die vorgeschlagene Lösung bspw. an für eine Schneideinheit, weiter bspw. zum Schneiden von Gemüse. Diesbezüglich wird auf die DE 10 2008 013 863 A1 verwiesen. Auch ist eine vorbeschriebene Verriegelung bspw. nützlich zur Festlegung eines, bevorzugt eine zentrale Einfüll-/Beobachtungsöffnung des Deckels durchsetzenden Werkzeugs, wie bspw. eine Zitruspresse, welche weiter bspw. aus der DE 10 2009 006 672 A1 bekannt ist. Auch bei einem Rührgefäß mit einem Vertikalförderer, welcher Vertikalförderer bevorzugt eine zentrale Einfüll-/Beobachtungsöffnung des Deckels durchsetzt, weiter bevorzugt zur Ausbildung eines Schokoladenbrunnens oder dergleichen, erweist sich die vorgeschlagene Lösung von Vorteil. Diesbezüglich wird auf die DE 10 2009 037 229 A1 verwiesen. Weiter bietet sich die vorgeschlagene Lösung auch bei üblichen Zubereitungsgefäßen wie Kochtöpfe, ggf. für Großküchen, oder Dampfkochtöpfen an.

Weitere Merkmale der Erfindung sind nachstehend, auch in der Figurenbeschreibung, oftmals in ihrer bevorzugten Zuordnung zum Gegenstand des Anspruches 1 oder 2 oder zu Merkmalen weiterer Ansprüche erläutert. Sie können aber auch in einer Zuordnung zu nur einzelnen Merkmalen des Anspruches 1 oder 2 oder des jeweiligen weiteren Anspruches oder jeweils unabhängig von Bedeutung sein.

Bei einer insbesondere zwingend gerichteten Auflage des Deckels auf das Gefäß bzw. auf den Öffnungsrand des Gefäßes ist der jeweilige mit dem Riegelelement zusammenwirkende Hintergriff bevorzugt allein in den Bereichen ausgebildet, die zur Zusammenwirkung mit den Riegelelementen vorgesehen sind. Ist, wie weiter bevorzugt, der Deckel hinsichtlich seiner Umfangsausrichtung wahllos auf das Gefäß auflegbar, so weiter bspw. bei einer im Grundriss kreisscheibenförmigen Ausgestaltung des Deckels, weiter bspw. bei einer quadratischen Ausgestaltung des Deckels, so ist bevorzugt der Hintergriff an dem Deckel oder an dem Gefäß je nach Anordnung der Riegelelemente umlaufend ausgebildet, um so eine Verriegelung des Deckels gegen Entfernen in jeder Deckelauflagestellung zu ermöglichen. Entsprechend ist es nicht nötig, dass der Benutzer den Deckel in einer vorgegebenen Ausrichtung auf das Gefäß aufsetzt. Die Deckelverriegelung ist in jeder Deckelausrichtung gegeben.

In einer weiter bevorzugten Ausgestaltung des Erfindungsgegenstandes ist vorgesehen, dass die Dichtung zum verriegelnden Eingriff mit dem Deckel bewegbar ist, demzufolge die Dichtung das Riegelelement im Sinne der Erfindung darstellt. Die bevorzugt rührgefäßseitige, weiter bevorzugt im Bereich des Öffnungsrandes des Gefäßes vorgesehene Dichtung übernimmt entsprechend eine Doppelfunktion, nämlich zum einen in üblicher Weise eine abdichtende Funktion und zum weiteren die Funktion als Riegelelement zum Verriegeln des Deckels an dem Gefäß. Hierzu ist weiter bevorzugt, dass die Dichtung mit Bezug auf eine vertikale Mittelachse des Gefäßes radial bewegbar ist, so aus einer Entriegelungsstellung in eine Verriegelungsstellung und zurück. Insbesondere bei einer umlaufend mit dem Öffnungsrand des Gefäßes zusammenwirkenden Dichtung bezieht sich die vorbeschriebene radiale Beweglichkeit der Dichtung auf einen vertikalen Querschnitt, so dass weiter mit Bezug auf die umlaufende Dichtung eine radiale Bewegung derselben in die Verriegelungsstellung durch eine Radialbewegung der Dichtung in Richtung auf die vertikale Mittelachse des Gefäßes erreicht ist, weiter entsprechend bei einem kreisscheibenförmigen Deckel und entsprechender kreisringförmiger Ausgestaltung des Öffnungsrandes durch eine Verringerung des Innendurchmessers der Dichtung. In der Entriegelungsstellung hingegen ist die Dichtung auf ein Innendurchmessermaß erweitert, welches ein einfaches Entnehmen und Aufsetzen des Deckels auf den Öffnungsrand erlaubt. Der den Hintergriff ausformende Abschnitt des Deckels ist hierbei bevorzugt frei an der das Riegelelement darstellenden Dichtung vorbei bewegbar.

In bevorzugter Ausgestaltung ist die Dichtung pneumatisch oder hydraulisch oder mechanisch bewegbar. Im Falle einer vorgesehenen Mechanik wirkt bspw. ein Linearstößel auf das Riegelelement ein, wozu weiter bspw. ein Elektromotor oder ein Elektromagnet vorgesehen ist. Im Falle einer pneumatischen Bewegung der Dichtung ist bevorzugt ein Kompressor vorgesehen, der zur Dichtungsbewegung für die nötige Luftdruckerhöhung sorgt. Bevorzugt wird eine Ausbildung, bei welcher die Dichtung hydraulisch bewegt ist, so insbesondere unter Nutzung eines Hydrauliköls, weiter bevorzugt unter Nutzung einer für die Nutzung in Geräten für die Lebensmittelzubereitung zulässigen Hydraulikflüssigkeit. Ist das Übertragungsmedium ein Fluid, so ist diesbezüglich ein inkompressibles Medium bevorzugt.

In weiter bevorzugter Ausgestaltung ist innerhalb des Gefäßes ein eingeschlossenes Hydraulikvolumen vorgesehen, das durch ein außerhalb des Gefäßes, nämlich bevorzugt in dem Grundgerät der Küchenmaschine vorgesehenes Stellteil beaufschlagt ist. Das in dem Gefäß vorgesehene Hydraulikvolumen ist derart eingeschlossen, dass dieses auch bei Entnahme des Gefäßes bspw. aus der Rührgefäßaufnahme der Küchenmaschine nicht, bevorzugt auch nicht unter Anwendung haushaltsüblicher Gegenstände, weiter insbesondere nicht im Zuge einer Reinigung des Gefäßes, austreten kann. Die Hydraulikmittelmenge ist hierbei so bemessen, dass zufolge einer Beaufschlagung durch das geräteseitige Stellteil über die Hydraulikflüssigkeit eine bevorzugt nach radial innen gerichtete Verlagerung des Riegelelements, insbesondere der umlaufenden Dichtung am Öffnungsrand des Gefäßes herbeigeführt werden kann. Das in der Verriegelungsstellung bevorzugt weiterhin auf das Hydraulikvolumen einwirkende Stellteil hält den Druck innerhalb des gefäßseitigen Hydrauliksystems auf einem bevorzugt definierten Druck, der die Verriegelung des Deckels an dem Gefäß auch bei Erhöhung des Gefäßinnendrucks - bspw. beim Kochen einer Speise im Gefäß - sichergestellt ist. Mit einer bevorzugten Rückverlagerung des Stellteils und entsprechender Nichtbeaufschlagung des Hydraulikvolumens wird eine Entspannung des Hydrauliksystems erreicht, zufolge des hierbei nicht mehr vorhandenen Hydraulikdrucks eine bevorzugt selbsttätige Rückstellung des Riegelelements, insbesondere der Dichtung in die Entriegelungsstellung erreicht wird. Der Deckel ist hiernach bevorzugt reibungsarm vom Gefäß abhebbar. In alternativer Ausgestaltung ist in dem Gefäß ein eingeschlossenes Luft- bzw. Gasvolumen vorgesehen, das entsprechend durch ein außerhalb des Gefäßes vorgesehenes Stellteil beaufschlagt ist.

Die Einwirkung auf das Hydraulikvolumen, alternativ auf das Luft- oder Gasvolumen, erfolgt in weiter bevorzugter Ausgestaltung, insbesondere bei einem Rührgefäß für eine Küchenmaschine fußseitig des Gefäßes, weiter insbesondere in einem dem Aufsetzbereich des Gefäßes in eine entsprechend ausgeformte Rührgefäßaufnahme der Küchenmaschine zugeordneten Bereich. Weiter bevorzugt ist der Einwirkungsbereich in einem unteren Viertel bis einem unteren Drittel - jeweils von einer Aufstandfläche des Gefäßes in vertikaler Höhenrichtung betrachtet - ausgebildet. In entsprechender Zuordnungsstellung bei in der Küchenmaschine eingesetztem Rührgefäß ist das maschinenseitige Stellteil zur Einwirkung auf das Hydraulikvolumen geeignet, wobei in weiter bevorzugter Ausgestaltung der Antrieb ein sich relativ zu dem Rührgefäß bewegbares Stellteil ist. Hierbei kann es sich um einen über einen Elektromotor und ggf. über ein zwischengeschaltetes Getriebe linear bewegliches, weiter bevorzugt mit Bezug auf eine zentrale Mittelachse des eingesetzten Gefäßes quer zur Mittelachse und entsprechend bevorzugt radial bewegliches Stellteil, bspw. in Form eines Stößels, handeln, weiter bspw. auch um einen elektromagnetisch bewegten Stößel, bspw. in Form eines Hubmagneten. Das Stellteil weist hierbei bevorzugt zwei definierte Endstellungen auf, nämlich eine definierte Endstellung in Beaufschlagungsrichtung des gefäßseitigen Hydraulikvolumens und eine definierte Rückzugsstellung, in welcher das Hydraulikvolumen des Gefäßes nicht beaufschlagt ist.

In weiter bevorzugter Ausgestaltung ist ein Antriebshub des sich relativ zu dem Gefäß beweglichen Stellteiles von 20 bis 40 mm, bevorzugt 25 bis 35 mm, vorgesehen, um so eine toleranzunempfindliche Wegeerfassung, wie weiter unten näher beschrieben, durchführen zu können. Diese Hubbewegung wird in bevorzugter Ausgestaltung zufolge einer Drehbewegung des Stellteiles ausgeführt, weiter insbesondere zufolge einer Drehbewegung entlang einer konzentrisch zur Mittelachse des Gefäßes ausgelegten Kreislinie. Hierbei erweist es sich von Vorteil, wenn das Stellteil als Drehscheibe mit einem Eingriffsabschnitt zur Beaufschlagung des rührgefäßseitigen Hydraulikvolumens ausgebildet ist. Der Eingriffsabschnitt vollzieht im Zuge einer Drehbewegung der Drehscheibe den vorbezeichneten Hubweg.

Die Bewegung des Stellteils, insbesondere des Eingriffsabschnitts, wird in bevorzugter Ausgestaltung jedenfalls hinsichtlich einer vorgegebenen Endstellung überwacht, weiter alternativ hinsichtlich beider vorgegebenen Stellteil-Endstellungen. So ist bspw. eine sensormäßige Erfassung der Endstellung bzw. der Endstellungen vorgesehen, weiter bevorzugt in Form eines Endschalters, der insbesondere den Hubweg erfasst, über welchen Hubweg auf den Verlagerungsweg des oder der Riegelelemente zur Verriegelung des Deckels an dem Gefäß rückschließbar ist. Es ist so entsprechend eine Überprüfung der Deckelverriegelungsstellung anhand der erreichten Stellteil-Endstellung überwachbar. Gefäßseitig ist bevorzugt ein Übertragungsmittel vorgesehen, zur Übertragung der Hubbewegung des Stellteils bzw. dessen Eingriffsabschnittes auf das, das Riegelelement bzw. die Riegelelemente beaufschlagende Fluid. So ist weiter bevorzugt das Übertragungsmittel ein das Fluid beeinflussendes Komprimierungselement, welches durch das Stellteil beaufschlagt wird. Hierbei kann es sich bspw. um ein Balgelement handeln, weiter bspw. um einen Faltenbalg mit unelastischer Wandung. Bevorzugt wird diesbezüglich eine Kolben- Zylinder-Anordnung, wobei der Kolben nach radial außen gerichtet eine Beaufschlagungsfläche für das bevorzugt küchenmaschinenseitige Stellteil bzw. den Eingriffsabschnitt anbietet und eine Kolbenfläche zur Beaufschlagung des Fluids, insbesondere des Hydraulikvolumens.

In weiter bevorzugter Ausgestaltung des Erfindungsgegenstandes ist eine Leitungsverbindung zwischen einem fußseitigen Hydraulikmittelvorrat zu einem öffnungsrandseitigen Hydraulikmittelvorrat ausgebildet. Der fußseitige Hydraulikmittelvorrat ist hierbei weiter bevorzugt dem Komprimierungsteil zugeordnet. Der öffnungsrandseitige Hydraulikmittelvorrat ist zugeordnet dem zu verlagernden Riegelelement bzw. der Dichtung, wozu weiter, wie weiter unten näher erläutert, ein bevorzugt ringförmig die Dichtung umgebender Hohlraum vorgesehen ist. Die weiter vorgesehene Leitungsverbindung der Hydraulikmittelvorräte, bevorzugt in Form eines Hohlkammerkanals, überbrückt den vertikalen Abstand zwischen dem fußseitigen, d.h. weiter bevorzugt in einem unteren Viertel oder einem unteren Drittel des Gefäßes vorgesehenen Hydraulikmittelvorrat und dem öffnungsrandseitig vorgesehenen Vorrat zur Beaufschlagung der, bevorzugt der Verriegelung des Deckels dienenden Dichtung. Die Leitungsverbindung ist druckstabil, entsprechend nicht elastisch ausgebildet, bspw. in Form eines druckfesten Schlauches oder einer starren Rohrverbindung. Alternativ ist die Leitungsverbindung als Hohlkammer einer doppelwandigen Gefäßwandung ausgebildet. Beide Kammern (Hydraulikmittelvorrat) und die Leitungsverbindung sind bevorzugt vollständig mit dem Medium befüllt (bevorzugt mit 5 bis 20 cm³ weiter bevorzugt mit 10 cm³) und sind dichtend miteinander verbunden.

Diese Leitungsverbindung - im einfachsten Fall ein die Hydraulikmittelvorräte verbindendes Rohr - erstreckt sich in einer Ausgestaltung außenseitig der Gefäßwandung entlang derselben. Bevorzugt wird diesbezüglich eine Ausgestaltung, bei welcher das Gefäß einen sich vertikal erstreckenden Griff aufweist und wobei weiter die Leitungsverbindung den Griff durchsetzend vorgesehen ist. Entsprechend ist bevorzugt die Leitungsverbindung geschützt vor äußeren Eingriffen in dem Gefäßgriff integriert. In diesem Zusammenhang ist weiter bevorzugt, das Komprimierungsteil, insbesondere die Kolben-Zylinder-Anordnung, in einem fußseitigen Bereich des Gefäßes angeordnet. In vorteilhafter Weise ist dieser, das für das maschinenseitige Stellteil zugängliche Komprimierungsteil bei in der Gefäßaufnahme des Gerätes eingesetztem Gefäß für den Benutzer nicht zugänglich, womit einer möglichen Manipulation der Deckelverriegelung entgegengewirkt ist.

In weiter bevorzugter Ausgestaltung wird der in dem Fluid zufolge Beaufschlagung erreichte Druck überwacht, wozu bevorzugt ein Drucksensor in dem Gefäß angeordnet ist, weiter bevorzugt fußseitig des Gefäßes zugeordnet dem fußseitigen Hydraulikmittelvorrat, weiter bevorzugt zugeordnet dem Komprimierungsteil. So ist entsprechend weiter bevorzugt eine zweifache Überwachung der Deckelverriegelung vorgesehen, nämlich zum einen eine Drucküberwachung und zum anderen eine Überwachung des Hubweges des Komprimierungsteiles bzw. des das Komprimierungsteil beaufschlagenden Stellteiles. Aus den beiden Informationen lassen sich zufolge ihrer Größe und zeitlichen Abfolge die Zustände der Deckelverriegelung sicher erkennen. So ist in diesem Zusammenhang weiter bevorzugt vorgesehen, dass bei einer ordnungsgemäßen Deckelverriegelung zeitlich versetzt zunächst die vorgegebene Endstellung des Stellteils erreicht wird und dann der vorgegebene Fluiddruckpunkt. Ist in dem Hydraulikvolumen kein Druck vorhanden (0 bar) so ergibt ein entsprechendes Signal des Drucksensors (ggf. als auf einem Display der Küchenmaschine anzuzeigende Meldung), dass das System offen ist und entsprechend noch keine Deckelverriegelung durchgeführt wurde. Bei einer ordnungsgemäßen Deckelverriegelung liegt ein über den Drucksensor erfassbarer Fluiddruck von bevorzugt 0,5 bis 0,8 bar, weiter bevorzugt 0,6 bar vor. Ein Druckwert zwischen 0 bar und dem bevorzugten Verriegelungsdruck von 0,6 bar, so bspw. 0,3 bar, lässt auf eine Verlagerung der Riegelelemente in die Verlagerungsstellung schließen, ohne dass ein Deckel aufgesetzt ist, oder auf einen nicht ordnungsgemäß aufgesetzten Deckel. Auch dieser Zustand kann in Form einer Warnmeldung bspw. auf einem Display der Küchenmaschine angezeigt werden. Auch in Verbindung über die Wegmessung des Stellteiles ist ein nicht ordnungsgemäß aufgesetzter Deckel erfassbar, da in diesem Fall zeitlich versetzt zunächst gegebenenfalls der vorgegebene Fluiddruck und hiernach die vorgegebene Endstellung des Stellteils erreicht wird. Ist hingegen kein Verlagerungsweg des Stellteiles durch den Wegmesser erfassbar, so lässt dies auf ein nicht ordnungsgemäß positioniertes Rührgefäß in der Rührgefäßaufnahme der Küchenmaschine schließen. In bevorzugter Ausgestaltung beträgt die zeitliche Differenz zwischen Weg- und Druckmessung in einer der möglichen Deckelstellungen, weiter bevorzugt in allen möglichen Deckelstellungen 0,3 bis 0,8 Sekunden, vorzugsweise 0,5 Sekunden.

Weiter bevorzugt ist die Dichtung in einem Querschnitt, insbesondere in einem mit Bezug auf die Fügestellung des Deckels vertikalen Querschnitt insgesamt U-förmig gestaltet, wobei die beiden U-Schenkel nicht zwingend parallel zueinander verlaufen, sondern ggf. in einem spitzen Winkel von 1° bis 5° zu einer Horizontalebene einschließend. Auch der die U-Schenkel verbindende, zumindest in einer unbelasteten Grundstellung annähernd sich im Querschnitt vertikal erstreckende U-Steg schließt nicht zwingend einen rechten Winkel von 90° zu den U-Schenkeln ein, wobei weiter der U-Steg auch eine von einer im Querschnitt gestreckten Form abweichende Ausgestaltung aufweisen kann.

Die Dichtung ist über einen oder wie weiter bevorzugt über beide U-Schenkel an dem Gefäß gehaltert, wobei weiter der U-Steg zur Verriegelung und weiter zur Dichtung gegen den Deckel bewegbar ist, so weiter bevorzugt aus einer unbelasteten Grundstellung, in welcher der U-Steg sich zumindest annähernd zwischen den U-Schenkeln erstreckt, heraus in eine nach radial innen vorgewölbte Verriegelungsstellung, in welcher Verriegelungsstellung bevorzugt zumindest ein Teilabschnitt des U-Steges aus den zwischen den U-Schenkeln begrenzten Raum nach radial innen tritt, um so die Verriegelung des Deckels und weiter bevorzugt die Abdichtung zu erzielen. Im Falle einer bevorzugten hydraulischen Beaufschlagung der Dichtung wirkt die Hydraulikflüssigkeit auf den durch die U-Schenkel und den U-Steg zumindest nach radial innen begrenzten Raum, entsprechend auf die den U-Schenkeln zugewandte Rückseite des U-Stegs.

Der U-Steg formt in weiter bevorzugter Ausgestaltung zumindest über einen vertikalen Teilabschnitt ein Sperrelement aus, welches bevorzugt im Vertikalquerschnitt eine dreikantähnliche oder trapezähnliche Ausprägung aufweist, dies weiter bevorzugt mit einem im Querschnitt betrachteten Höhen-Breiten-Verhältnis von < 2, so bspw. von 1,95:1 oder 1,15:1.

Der Deckel weist in einer bevorzugten Ausgestaltung einen in das Gefäß eingreifenden Kragen auf, der bei einer weiter bevorzugten kreisscheibenförmigen Ausgestaltung des Deckels weiter bevorzugt im Grundriss kreisringförmig, konzentrisch zu einer Mittelachse des Gefäßes ausgebildet und angeordnet ist. Die nach radial außen weisende, umlaufende Kragenfläche wirkt in bevorzugter Ausgestaltung im Verriegelungszustand mit dem Riegelelement bzw. mit dem aktiven, in die Verriegelungsstellung verlagerbaren Dichtungsabschnitt zusammen, wobei weiter im Bereich des Kragens der zur Verriegelung dienende Hintergriff vorgesehen ist. Dieser untergreift in der Verriegelungsstellung das Riegelelement bzw. den verriegelungsaktiven Abschnitt der Dichtung, so dass ein Abheben des Deckels in der Verriegelungsstellung unterbunden ist. Weiter ist der Kragen in vorteilhafter Weise so ausgebildet, dass in einem Belastungsfall des Deckels, bspw. im Falle einer Druckerhöhung im Gefäß, die verriegelnde Sperrung des Deckels unterstützt wird, entsprechend einer sich selbsttätig verstärkenden Sperrung. Im Falle einer hydraulischen oder pneumatischen Beaufschlagung des Riegelelements ist zufolge dieser Ausgestaltung auch eine Sicherung bei Ausfall der Riegelelement-Druckbeaufschlagung erreicht. Die Selbstsperrung wird erst aufgehoben, wenn der Druck im Gefäß einen definierten Wert unterschritten hat.

In vorteilhafter Weise besteht die Dichtung aus einem Weichkunststoff, insbesondere aus einem elastischen Weichkunststoff, bspw. Elastomere wie TPE (thermoplastische Elastomere), NBR (Nitril-Butadin-Kautschuk) oder Silikon.

Aus der Verriegelungsstellung heraus verlagert sich der für die Verriegelung, weiter bevorzugt auch für die Abdichtung maßgebliche Abschnitt der Dichtung bevorzugt selbsttätig zurück in die freigebende Grundausrichtung, dies weiter nach entsprechendem Abbau der auf die Dichtung einwirkenden Belastung im Verriegelungsfall. Diese Rückstellfähigkeit ist bevorzugt durch die elastischen Eigenschaften des Dichtungsmaterials gegeben. In weiter bevorzugter Ausgestaltung wird die Rückstellung dadurch unterstützt, dass die Dichtung eine aus einem Hartwerkstoff bestehende, integrierte Feder aufweist. Diese Feder ist bspw. im Zuge der Herstellung der Dichtung vom Dichtungsmaterial umspritzt, liegt weiter entsprechend bevorzugt vollständig umschlossen in der Dichtung ein. Hinsichtlich des gewählten Hartwerkstoffes für die Feder wird bevorzugt ein Federstahl verwendet, weiter bevorzugt in Form einer wendelförmigen Feder oder Druckschraubenfeder. Die Rückstellkraft der integrierten Feder ist - bevorzugt in Addition zu der Eigenrückstellkraft der Dichtung - so bemessen, dass diese von dem die Dichtung bzw. den wirksamen Dichtungsabschnitt in die Verriegelungsstellung verlagerbaren Beaufschlagungsmedium überwunden werden kann. So ist in diesem Zusammenhang bevorzugt, dass bei einem Abfall des in dem Rührgefäß während des Zubereitungsprozesses vorhandenen Drucks von bspw. 0,5 bar auf 0 bar die eingebettete Rückstellfeder die Dichtung bzw. das hierdurch gebildete Riegelelement in die Ausgangslage zurückstellt. Zufolge der Anordnung einer Feder in die Dichtung ist die Rückstellfähigkeit unabhängig von der Temperatur und/oder vom Alterungszustand der Dichtung konstant.

Bevorzugt ist weiter jedenfalls das Weichkunststoffteil der Dichtung unter Bildung eines Hohlraumes von der Gefäßwandung beabstandet, welcher Hohlraum zur Beaufschlagung des dicht- und sperrwirksamen Abschnittes der Dichtung bzw. des Weichkunststoffteils bevorzugt zum Durchströmen einer Hydraulikflüssigkeit genutzt wird.

Um insbesondere eine kontrollierte Verlagerung des das Riegelelement ausbildenden Dichtungsabschnittes sicherzustellen, ist in einer Weiterbildung des Erfindungsgegenstandes vorgesehen, dass die Dichtung aus einem Hart- und einem Weichkunststoffteil zusammengesetzt ist, wobei das Hartkunststoffteil radial außen angeordnet ist. Das Hartkunststoffteil dient hierbei der Abstützung der Dichtung, insbesondere im Bereich der U-Öffnung der bevorzugt in einem Vertikalquerschnitt U-förmig gestalteten Dichtung, derart, dass zufolge der Abstützung eine definierte Auslenkung des maßgeblichen Abschnitts des Weichkunststoffteils der Dichtung in die Verriegelungs- und bevorzugt Dichtungsstellung erreicht wird. Darüber hinaus dient das Hartkunststoffteil in bevorzugter Ausgestaltung zusammen mit zugeordneten Gefäßwandungsabschnitten bei einer bevorzugten U-förmigen Ausgestaltung des Weichkunststoffteils der Halterung der U-Schenkel.

Zudem ist bevorzugt, dass der Hohlraum in einem bevorzugten VertikalQuerschnitt zwischen dem Weichkunststoffteil und dem Hartkunststoffteil gebildet ist, so dass weiter entsprechend bevorzugt dieser Hohlraum unabhängig von der Gefäßwandung im Öffnungswandbereich gebildet ist. Das Hartkunststoffteil liegt hierbei in einer Ausgestaltung als gesondertes, im Zuge der Herstellung der Dichtungsanordnung als insgesamt ringförmiges Loseteil vor. Alternativ ist eine einteilige Ausgestaltung von Hartkunststoffteil und Weichkunststoffteil möglich, so bspw. zufolge Anspritzen der Weichkunststoffkomponente an dem Hartkunststoffteil.

In weiter bevorzugter Ausgestaltung ist das Rührgefäß der Küchenmaschine fußseitig in der Rührgefäßaufnahme verriegelbar derart, dass eine Entnahme des Rührgefäßes aus der Rührgefäßaufnahme erst nach Aufhebung der Verriegelung ermöglicht ist. Insbesondere während des Betriebs des in dem Rührgefäß vorgesehenen Rührwerks, weiter ggf. auch während des Betriebs einer in dem Rührgefäß vorgesehenen oder auf das in dem Rührgefäß aufgenommene Medium einwirkenden Heizung ist die Verriegelung nicht aufhebbar. Auch diese Rührgefäß-Verriegelungsstellung ist detektierbar, so bspw. zufolge entsprechender Anordnung von Sensoren. Weiter ggf. auch durch eine elektrische Kontaktierung. Als besonders vorteilhaft erweist sich diesbezüglich eine Ausgestaltung, bei welcher die Verriegelung durch das Stellteil bewirkt wird. Entsprechend dient das Stellteil zugleich der zu verriegelnden Festsetzung des Rührgefäßes in der Rührgefäßaufnahme sowie der Beauschlagung des rührgefäßseitigen Komprimierungsteils, wozu weiter bevorzugt der an dem Stellteil ausgebildete Eingriffsabschnitt erst in einer Verriegelungsstellung des Rührgefäßes in die Zuordnungsstellung zum rührgefäßseitigen Komprimierungsteil gelangt. Entsprechend ist eine Beaufschlagung des Komprimierungsteiles und hierüber eine Verriegelung des Deckels nur in der Verriegelungsstellung des Rührgefäßes in der Rührgefäßaufnahme ermöglicht.

Insbesondere bei einer Ausgestaltung des Stellteiles als Drehscheibe bietet sich eine Ausbildung an, bei welcher an dem Rührgefäß ein Hakenabschnitt ausgebildet ist, der mit einem stellteilseitigen Haken in Übergriff kommt. Entsprechend ist eine Art Bajonettverriegelung zwischen Rührgefäß und rührgefäßaufnahmeseitigem Stellteil erreichbar.

Das der Beaufschlagung des rührgefäßseitigen Komprimierungsteils, weiter auch der Verriegelung des Rührgefäßes in der Rührgefäßaufnahme dienende Stellteil ist bspw. handbetätigbar, wozu weiter bspw. eine angeformte Handhabe zum Ergreifen durch den Benutzer frei liegt. Bevorzugt wird diesbezüglich eine Ausgestaltung, bei welcher das Stellteil durch einen, bevorzugt von einem rührwerkseitigen Elektroantrieb gesonderten Elektromotor angetrieben wird, so weiter insbesondere ausgelöst durch Einschalten der Küchenmaschine oder willensbetont zufolge Tastendruck oder dergleichen.

Zufolge der vorbeschriebenen Lösung erfolgt in bevorzugter Ausgestaltung die kombinierte Funktion von Dichtung und Sperrung synchron, wobei unabhängig von einem Innendruck in dem Rührgefäß oder Zubereitungsgefäß eine hochfeste Sperrung in Axialrichtung des Deckels erreicht ist. Bevorzugt erfolgt die Verriegelung gleichmäßig über den gesamten Umfang des Deckels. Im Belastungsfall, d.h. bei einem Innendruck im Gefäß, bleibt auch bei einem Betriebsdruckversagen - d.h. bei Versagen der auf das Riegelelement einwirkenden Kraft in Richtung Sperrstellung - eine selbsttätige Sperrung erhalten bis der Innendruck im Gefäß abfällt. Auch ist insbesondere zufolge der Halterung der Dichtung an dem Gefäß diese nicht durch äußere Einwirkungen, wie sie bspw. beim Reinigen auftreten, oder bei einer Fehl- oder Überbeanspruchung aus der Halterung entfernbar. Zudem ist der Montagesitz der Dichtung so fixiert, dass ein Eindringen von Speisen oder Fremdkörpern verhindert ist, welche Fremdkörper die Funktion beeinträchtigen könnten. Auch ist die Rückstellung der Dichtung unabhängig von der Temperatur und dem Alterungszustand des Dichtungsmaterials zufolge der integrierten Feder stets konstant.

Zudem wird der Deckel bevorzugt rotatorisch ungerichtet, kraftfrei und ohne zusätzlichen manuellen Verriegelungsvorgang gefügt, wobei der Verriegelungsvorgang bevorzugt reibungsfrei durchgeführt wird. Die Dicht- und Sperrfunktion erfolgt hierbei bevorzugt kombiniert, wobei in einer weiter bevorzugten Ausgestaltung der Küchenmaschine die Aktivierung des maschinenseitigen Stellteils nur bei einem eingesetzten und weiter bevorzugt verriegelten Rührgefäß in der maschinenseitigen Rührgefäßaufnahme durchführbar ist. Weiter ist insbesondere die Aktivierung des in dem Rührgefäß vorgesehenen Rührwerks, weiter bevorzugt auch einer ggf. bodenseitig des Rührgefäßes vorgesehenen Heizung nur dann durchführbar, wenn der Deckel ordnungsgemäß auf dem Rührgefäß aufgesetzt und an diesem zufolge Verriegelung festgelegt ist.

Der bevorzugt umlaufende Hintergriff am Deckel bildet zugleich die Dichtlinie des Systems, wobei der Durchmesser des bevorzugt im Grundriss kreisrunden Hintergriffes so auf das Pumpvolumen des Hydrauliksystems abgestimmt ist, dass dieser durch Weg- und Drucksignale an anderer Stelle - bevorzugt im Fußbereich des Rührgefäßes - identifiziert werden kann. Der Identifikationsdurchmesser des deckelseitigen Hintergriffs kommt hierbei nur einmal im Bereich des Deckels vor, so dass eine eindeutige Erkennung gewährleistet ist. Der maximale Hubweg und die Elastizität der das Riegelelement ausbildenden Dichtung ist so ausgelegt, dass auch bei partiellen Störungen (bspw. Manipulation zufolge Beeinflussung der Dichtung von Hand) die nicht beaufschlagten Zonen das verdrängte Volumen aufnehmen können, ohne ein Drucksignal auszulösen. Alle zur Auslösung der Deckelverriegelung vorgesehenen Bauelemente, wie auch die die korrekte Verriegelung detektierbaren Sensoren, sind in der in der in der Rührgefäßaufnahme eingesetzten Stellung des Rührgefäßes nicht von außen zugänglich, entsprechend nicht durch den Benutzer erreichbar. Die Signalübertragung der Druck- und Stellwegüberwachung erfolgt bevorzugt mechanisch an die Küchenmaschine, weiter bevorzugt elektrisch. Auch eine optische Signalübertragung ist diesbezüglich möglich.

Weiter betrifft die Erfindung eine Küchenmaschine nach den Merkmalen des Oberbegriffs des Anspruches 1 oder nach Anspruch 1. Zur Lösung der eingangs gestellten Problematik wird diesbezüglich vorgeschlagen, dass der Deckel durch ein oder mehrere, unabhängig von einer Bewegung des Rührgefäßes radial bewegbare und an dem Rührgefäß oder an dem Deckel gelagerte Riegelelemente verriegelbar ist, wobei die Riegelelemente in einem, an dem Deckel oder an dem Rührgefäß ausgebildeten Hintergriff eingreifen und die Riegelelemente an mindestens zwei umfangsmäßig beabstandeten Bereichen an den Deckel eingreifen, um den Deckel insgesamt gegen Entfernen zu sperren und dass der Hintergriff in Aufsetzrichtung des Deckels zweifach mit Versatz ausgebildet ist. Zudem betrifft die Erfindung ein Zubereitungsgefäß nach den Merkmalen des Oberbegriffs des Anspruches 2, wobei zur Lösung der eingangs gestellten Problematik darauf abgestellt ist, dass der Deckel durch ein oder mehrere, unabhängig von einer Bewegung des Rührgefäßes radial bewegbare und an dem Rührgefäß oder an dem Deckel gelagerte Riegelelemente verriegelbar ist, wobei die Riegelelemente in einem, an dem Deckel oder an dem Rührgefäß ausgebildeten Hintergriff eingreifen und die Riegelelemente an mindestens zwei umfangsmäßig beabstandeten Bereichen an dem Deckel eingreifen, um den Deckel insgesamt gegen Entfernen zu sperren. Zufolge dieser Ausgestaltung ist in handhabungstechnisch günstiger Weise eine Verriegelung des Deckels am Gefäß erreichbar, wobei das Gefäß, wie auch im weiteren Text, entweder ein Rührgefäß für eine Küchenmaschine oder ein Zubereitungsgefäß ist. Hierbei kann die Bewegung des oder der Riegelelemente in die Verriegelungsstellung bzw. zur Aufhebung der Verriegelungsstellung in die entgegengesetzte Richtung manuell durch den Benutzer herbeigeführt werden oder weiter bspw. insbesondere zur Verriegelung des Deckels selbsttätig infolge des Deckelaufsetzens auf das Gefäß bzw. auf den Öffnungsrand des Gefäßes, in welchem Zuge des Aufsetzens die Riegelelemente selbsttätig ihre Verriegelungsstellung finden. Weiter sind diesbezüglich auch insbesondere geräteseitige Hilfsmittel möglich, die bei einem Rührgefäß für eine Küchenmaschine bevorzugt mit Einschalten der Küchenmaschine, weiter bevorzugt mit einem Einschalten des Rührwerks in dem Rührgefäß die Riegelelemente in die Verriegelungsstellung bewegen. Insbesondere mit Bezug auf einen vertikalen Querschnitt durch den Zusammenwirkungsbereich von Deckel und Gefäß, insbesondere von Deckel und Öffnungsrand des Gefäßes vollzieht jedes Riegelelement im Zuge der Verriegelung wie auch weiter bevorzugt im Zuge der Entriegelung eine Linearbewegung in Radialrichtung (mit Bezug auf eine Mittelachse des Gefäßes). Der oder die Riegelelemente sind in bevorzugter Ausgestaltung an dem Gefäß vorgesehen, zur Zusammenwirkung mit einem am Deckel ausgebildeten Hintergriff. Bevorzugt ist auch eine Anordnung des oder der Riegelelemente am Deckel, wobei in diesem Fall eine Zusammenwirkung mit einem gefäßseitigen Hintergriff vorgesehen ist. Sind die Riegelelemente deckelseitig angeordnet, so erfolgt weiter bevorzugt die Betätigung derselben über geräteseitige Hilfsmittel, weiter bevorzugt über Hilfsmittel, die rührgefäßseitig ausgebildet sind. Der von dem oder den Riegelelementen zu hintergreifende Hintergriff des Deckels oder des Gefäßes ist weiter bevorzugt so ausgebildet, dass der Deckel insbesondere gegen ein axiales An- bzw. Abheben gesichert ist, weiter bevorzugt derart, dass die Riegelelemente den axialen Verlagerungsweg des den Hintergriff aufweisenden Abschnitts insbesondere des Deckels sperren. Bevorzugt sind die Riegelelemente an mindestens zwei umfangsmäßig beabstandeten Bereichen vorgesehen, so dass eine entsprechende Sperrung an diesen mindestens zwei Bereichen erreicht ist. Erfindungsgemäß ist der Hintergriff in Aufsetzrichtung des Deckels zweifach ausgebildet, weiter mit einem vertikalen Versatz der beiden Hintergriffbereiche zueinander. Zufolge dieser Ausgestaltung dient ein Hintergriff bevorzugt der üblichen, weiter bevorzugt ordnungsgemäßen Deckelverriegelung, während der weitere Hintergriff, bevorzugt der in Deckelaufsetzstellung vertikal untere Hintergriff, als Nothalte-Hintergriff ausgebildet ist, der bspw. in dem Fall zum Einsatz kommt, wenn der vertikal obere, erste Hintergriff nicht oder nicht ordnungsgemäß von dem oder den Riegelelemente hintergriffen werden kann, so weiter bspw. bei einem über ein vorbestimmtes Niveau befüllten Gefäß.

Die vorbeschriebene Lösung bietet sich insbesondere bei einer Küchenmaschine gemäß Anspruch 1 an, bei welcher die Riegelelemente durch einen an der Küchenmaschine vorgesehenen Antrieb in die Hintergriffstellung bewegbar sind. Entsprechend gilt hinsichtlich ergänzender oder alternativer Merkmale im Zusammenhang mit dem Gegenstand gemäß Anspruch 17 für dessen anspruchsmäßige Zuordnung das Gleiche wie oben bezüglich der Merkmale der Küchenmaschine gemäß Anspruch 1 ausgeführt. Auch bietet sich die Lösung an für ein Zubereitungsgefäß gemäß Anspruch 2, womit entsprechend hinsichtlich ergänzender oder alternativer Merkmale im Zusammenhang mit dem Gegenstand des Anspruchs 18 für dessen anspruchsmäßige Zuordnung das Gleiche wie bezüglich der Merkmale gemäß Anspruch 2 ausgeführt.

Weitere Merkmale der Erfindung sind nachstehend, auch in der Figurenbeschreibung, oftmals in ihrer bevorzugten Zuordnung zum Gegenstand des Anspruches 17 oder 18 oder zu Merkmalen weiterer Ansprüche erläutert. Sie können aber auch in einer Zuordnung zu nur einzelnen Merkmalen des Anspruches 17 oder 18 oder des jeweiligen weiteren Anspruches oder jeweils unabhängig von Bedeutung sein.

Es ist in einer weiter bevorzugten Ausgestaltung vorgesehen, dass die zwei in Aufsetzrichtung des Deckels versetzen Hintergriffbereiche unterschiedliche Erstreckungen quer zur Aufsetzrichtung aufweisen, so weiter bei einer bevorzugten, in einem Grundriss betrachteten, kreisrunden Ausgestaltung der Hintergriffbereiche, zufolge unterschiedlicher Durchmesser im Anlagebereich für das oder die Riegelelemente. So ist in diesem Zusammenhang weiter bevorzugt vorgesehen, dass ein Hintergriffbereich, bevorzugt der vertikal in Aufsetzrichtung untere Hintergriffbereich, so ausgebildet ist, dass das Riegelelement in der Zusammenwirkungsstellung weiter in Radialrichtung vorfahren kann als in der Zusammenwirkungsstellung mit dem anderen, bevorzugt in Aufsetzrichtung vertikal oberen Hintergriffbereich. Entsprechend sind bei einem bevorzugt hydraulisch in die Verriegelungsstellung bewegbaren Riegelelement unterschiedliche Drucksignale erkennbar, so dass aufgrund des erfassten Drucksignals das Einfahren des Rastelements in den einen oder anderen Hintergriffbereich eindeutig detektierbar ist. So ist weiter bevorzugt die Küchenmaschine, insbesondere das Rührwerk in dem Rührgefäß nur dann aktivierbar, wenn das Riegelelement in einen vorgegebenen, definierten Hintergriffbereich eingefahren ist, so weiter bevorzugt in den Hintergriffbereich, der gegenüber dem anderen Hintergriffbereich durchmesservergrößert ist und so einen geringeren radialen Verfahrweg des Riegelelementes anbietet. Mit Bezug auf eine gemäß Anspruch 1 beschriebene Küchenmaschine oder mit Bezug auf ein Zubereitungsgefäß gemäß Anspruch 2 ergibt sich in einer Ausgestaltung eine Verriegelungskraft von 1000 bis 2000 Nm, bevorzugt 1500 Nm, wenn das Riegelelement in den Hintergriffsbereich zur ordnungsgemäßen Verriegelung des Deckels eingreift. Eine Dichtung in dieser Stellung ist zu 100 % gegeben. Hierbei wird bei einem bevorzugten Hydraulikdruck auf das Riegelelement von bevorzugt 0,6 bar ein Drucksignal ausgelöst, woraufhin im Falle einer Küchenmaschine diese bzw. das in dem Rührgefäß vorgesehene Rührwerk aktivierbar ist. Ist hingegen das Riegelelement in die Nothaltenut bzw. in den Nuthalte-Hintergriff eingefahren, so ergibt sich weiter im Zusammenhang mit einer Küchenmaschine gemäß Anspruch 1 oder im Zusammenhang mit einem Zubereitungsgefäß gemäß Anspruch 2 eine Verriegelungskraft von lediglich 150 bis 500 Nm, bevorzugt 250 Nm. Die Dichtung zwischen Deckel und Gefäßrand ist hierbei lediglich zu 50% gegeben. Zufolge der gegenüber der ordnungsgemäßen Stellung hierbei ermöglichten größeren Radialbewegung des Riegelementes ergibt sich in bevorzugter Ausgestaltung lediglich ein Hydraulikdruck von 0,3 bar, was zufolge entsprechender Druckerfassung kein Drucksignal erzeugt. Entsprechend ist die Küchenmaschine bzw. das in dem Rührgefäß bevorzugt vorgesehene Rührwerk bevorzugt nicht aktivierbar oder nur mit verringerter Rührwerkdrehzahl und/oder Heizleistung aktivierbar.

Zur Signalverstärkung ist in weiter bevorzugter Ausgestaltung ein Hintergriffbereich, nämlich bevorzugt der in Zusammenwirkungsstellung ein größeres radiales Verfahren des Riegelelementes zulassende Hintergriffbereich, in Umfangsrichtung betrachtet segmentiert.

Zufolge der zuvor beschriebenen Lösung wird insbesondere im Fehlerfalle während des Betriebs der Küchenmaschine, insbesondere des Rührwerks in dem Rührgefäß bzw. während des Betriebs des Zubereitungsgefäßes, ein selbständiger Abwurf des Deckels verhindert und eine Notabschaltung eingeleitet, dies aufgrund des bei einem Anheben des Deckels und entsprechendem Eingreifen des Riegelelements in die Nothaltenut nicht mehr vorhandenen Soll-Drucksignals. Diese Überwachung wirkt auch bspw. bei einem Versuch eines gewaltsamen Abhebens des Deckels.

Zudem betrifft die Erfindung eine elektromotorisch betriebene Küchenmaschine mit einem Rührgefäß, dass vorzugsweise durch einen Deckel verschließbar ist, wobei weiter das Rührgefäß einer Rührgefäßaufnahme der Küchenmaschine zuordbar ist.

Küchenmaschinen der in Rede stehenden Art sind, wie eingangs näher beschrieben, bekannt.

Um eine Küchenmaschine der in Rede stehenden Art weiter zu verbessern, wird vorgeschlagen, dass das Rührgefäß fußseitig in der Rührgefäßaufnahme verriegelbar ist. So ist bevorzugt eine Entnahme des Rührgefäßes aus der Rührgefäßaufnahme erst nach Aufhebung der Verriegelung ermöglicht.. Insbesondere während des Betriebs eines in dem Rührgefäß vorgesehenen Rührwerks, weiter ggf. auch während des Betriebs einer in dem Rührgefäß vorgesehenen oder auf das in dem Rührgefäß aufgenommene Medium einwirkenden Heizung ist die Verriegelung nicht aufhebbar. Diese Rührgefäß-Verriegelungsstellung ist bevorzugt detektierbar, so bspw. zufolge entsprechender Anordnung von Sensoren. Weiter ggf. auch durch eine elektrische Kontaktierung. Als besonders vorteilhaft erweist sich diesbezüglich eine Ausgestaltung, bei welcher die Verriegelung durch ein relativ zu dem Rührgefäß bewegbares Stellteil bewirkt wird, welches Stellteil weiter bevorzugt rührgefäßaufnahmeseitig vorgesehen ist.

Das Stellteil ist weiter bevorzugt quer zu einer Mittelachse des Rührgefäßes bewegbar, so bspw. in einer Horizontalebene linear verschiebbar oder, wie weiter bevorzugt, zur Ausführung einer Drehbewegung ausgebildet und gehaltert ist.

Insbesondere bei einer Ausgestaltung des Stellteiles als Drehscheibe bietet sich eine Ausbildung an, bei welcher an dem Rührgefäß ein Hakenabschnitt ausgebildet ist, der mit einem stellteilseitigen Haken in Übergriff kommt. Entsprechend ist eine Art Bajonettverriegelung zwischen Rührgefäß und rührgefäßaufnahmeseitigem Stellteil erreichbar.

Das der Verriegelung des Rührgefäßes in der Rührgefäßaufnahme dienende Stellteil ist bspw. handbetätigbar, wozu weiter bspw. eine angeformte Handhabe zum Ergreifen durch den Benutzer frei liegt. Bevorzugt wird diesbezüglich eine Ausgestaltung, bei welcher das Stellteil durch einen, bevorzugt von einem rührwerkseitigen Elektroantrieb gesonderten Elektromotor angetrieben wird, so weiter insbesondere ausgelöst durch Einschalten der Küchenmaschine oder willensbetont zufolge Tastendruck oder dergleichen.

Die Merkmale der vorbeschriebenen Ansprüche 1, 17 und 22 sind sowohl jeweils für sich wesentlich, als auch in jeder Kombination miteinander, wobei weiter Merkmale eines unabhängigen Anspruches 1, 17 oder 22 mit den Merkmalen eines weiteren unabhängigen Anspruches oder mit Merkmalen mehrerer unabhängiger Ansprüche kombinierbar sind, weiter auch mit nur einzelnen Merkmalen eines oder mehrerer der weiteren unabhängigen Ansprüche. Bezüglich möglicher Kombinationen der weiteren unabhängigen Ansprüche 2 und 18 gilt das Gleiche, wie vor beschrieben.

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung eine elektromotorisch betriebene Küchenmaschine mit einem zugeordneten, deckelverschlossenen Rührgefäß;
- Fig. 2: das Rührgefäß und den Deckel, sowie ein zur Zusammenwirkung mit dem Rührgefäß in einer Rührgefäßaufnahme der Küchenmaschine vorgesehenes Stellteil in perspektivischer Explosionsdarstellung;
- Fig. 3: eine der Fig. 2 entsprechende Darstellung mit Blick auf die Unterflächen von Deckel, Rührgefäß und Stellteil;
- Fig. 4: eine weitere der Fig. 2 entsprechende Darstellung, partiell geschnitten;
- Fig. 5: den vertikalen Schnitt durch das deckelverschlossene Rührgefäß in der Aufnahmestellung des Rührgefäßes in der küchenmaschinenseitigen Rührgefäßaufnahme;
- Fig. 6: eine partiell aufgebrochene Perspektivdarstellung des Fußbereiches des Rührgefäßes in Zusammenwirkung mit dem maschinenseitigen Stellteil, eine Grundstellung des Stellteils betreffend;
- Fig. 7: die Unteransicht gegen das Rührgefäß sowie dem zugeordneten Stellteil, die Grundstellung gemäß Fig. 6 betreffend;
- Fig. 8: eine Detailschnittdarstellung, den Fußbereich des Rührgefäßes sowie das zugeordnete Stellteil betreffend;
- Fig. 9: den Schnitt gemäß der Linie IX-IX in Fig. 5;

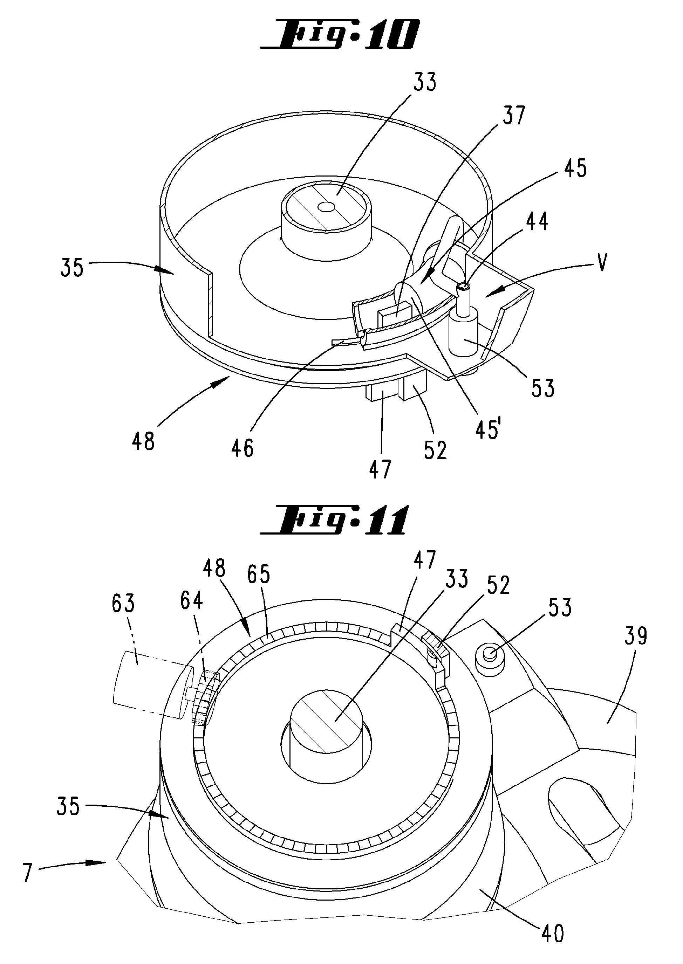

- Fig. 10: eine der Fig. 6 entsprechende Darstellung, jedoch nach Verlagerung des Stellteils zur Deckelverriegelung;
- Fig. 11: eine der Fig. 7 entsprechende Darstellung, die Stellung des Stellteiles gemäß Fig. 10 betreffend;

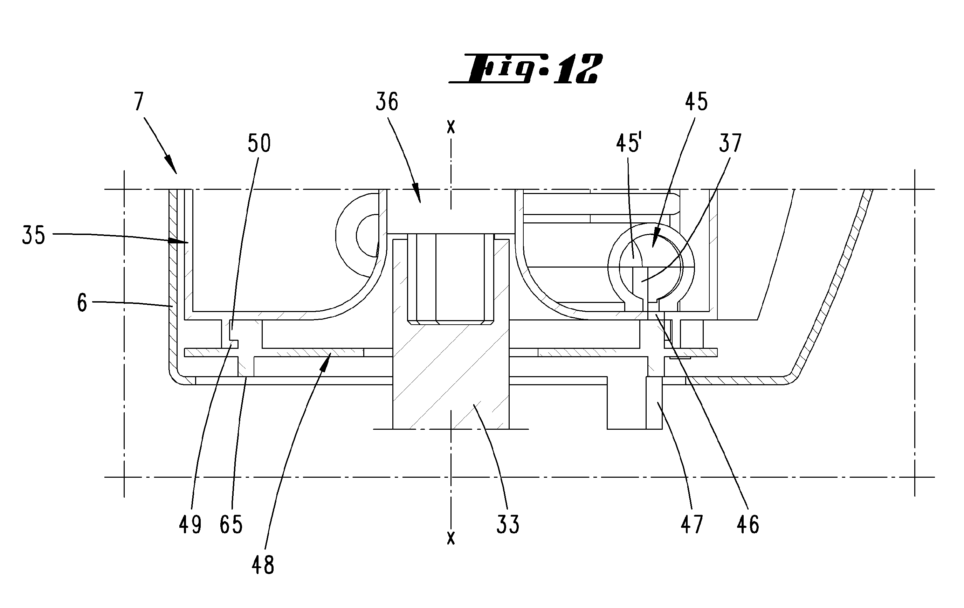

- Fig. 12: eine der Fig. 8 entsprechende Schnittdarstellung, betreffend die Stellung des Stellteiles gemäß Fig. 10;
- Fig. 13: eine Detail-Vertikalschnittdarstellung durch den Gefäßrandbereich bei ordnungsgemäß aufgesetztem und verriegelten Deckel;
- Fig. 14: die Herausvergrößerung des Bereiches XIV in Fig. 13;
- Fig. 15: eine Schnittdarstellung durch den Gefäßrandbereich mit aufgesetztem Deckel, die Nothaltestellung betreffend;
- Fig. 16: eine weitere der Fig. 6 entsprechende Darstellung, die Stellteil-Stellung bei einer Verriegelungsblockade im Bereich des Deckels betreffend;
- Fig. 17: eine der Fig. 7 entsprechende Darstellung, die Stellung gemäß Fig. 16 betreffend;
- Fig. 18: in einer Vertikalschnittdarstellung gem. Fig. 13 die Blockierungsstellung des mit dem Deckel zusammenwirkenden Riegelelements;
- Fig. 19: in schematischer Darstellung die Wirkung des maschinenseitigen Stellteiles auf ein rührgefäßseitiges Komprimierungsteil, hier eine Kolben-Zylinder-Anordnung;
- Fig. 20: eine der Fig. 19 entsprechende Darstellung, jedoch bei Ausgestaltung des Komprimierungsteils als Faltenbalg.

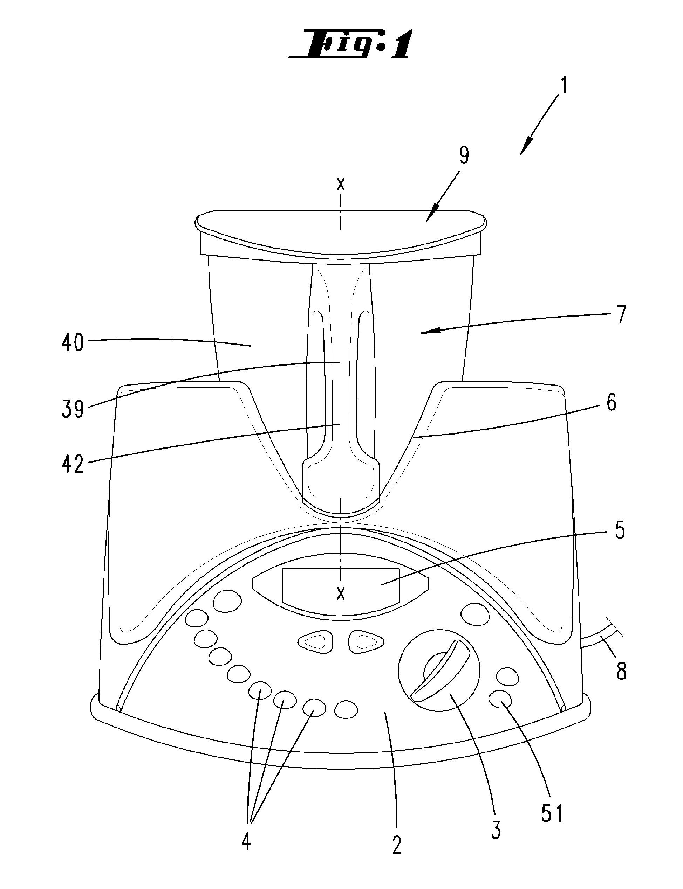

Dargestellt und beschrieben ist zunächst mit Bezug zu Fig. 1 eine elektrisch betriebene Küchenmaschine 1. Diese weist zunächst ein Bedienfeld 2 auf mit einem Regler 3 und Tastern 4 sowie bevorzugt ein Display 5 zum Anzeigen der insbesondere über den Regler 3 bzw. den Tastern 4 einzustellenden Parameter.

Des Weiteren verfügt die Küchenmaschine 1 über eine Rührgefäßaufnahme 6. In diese ist ein Rührgefäß 7, insbesondere im Fußbereich desselben bevorzugt formschlüssig aufnehmbar und halterbar.

Das Rührgefäß 7 ist bevorzugt im Wesentlichen rotationssymmetrisch ausgebildet, mit einer zentralen Vertikalachse x.

Im Bodenbereich weist das Rührgefäß 7ein Rührwerk 36 auf. Dieses ist in der Zuordnungsstellung des Rührgefäßes 7 in der Rührgefäßaufnahme 6 formschlüssig gekoppelt mit einem in der Küchenmaschine 1 vorgesehenen Rührwerkantrieb 33.

Die Elektroversorgung des Rührwerkantriebs 33 sowie ggf. einer behälterbodenseitig vorgesehenen Heizung und darüber hinaus auch der elektronischen Steuerung der gesamten Küchenmaschine 1 ist über ein Netzanschlusskabel 8 erreicht.

Der Behälter 7 ist weiter insbesondere im Betrieb des Rührwerks 36 durch einen Deckel 9 verschlossen. Dieser weist bevorzugt zentral, die Vertikalachse x des Rührgefäßes 7 aufnehmend, eine Einfüllöffnung 38 auf, dies weiter bevorzugt bei insgesamt im Wesentlichen kreisscheibenförmigem Grundriss des Deckels 9.

Der Deckel 9 stützt sich über seinen umlaufenden Randbereich 10 auf dem umlaufend zur nach vertikal oben weisenden Gefäßöffnung 11 verlaufenden Öffnungsrand 12 ab.

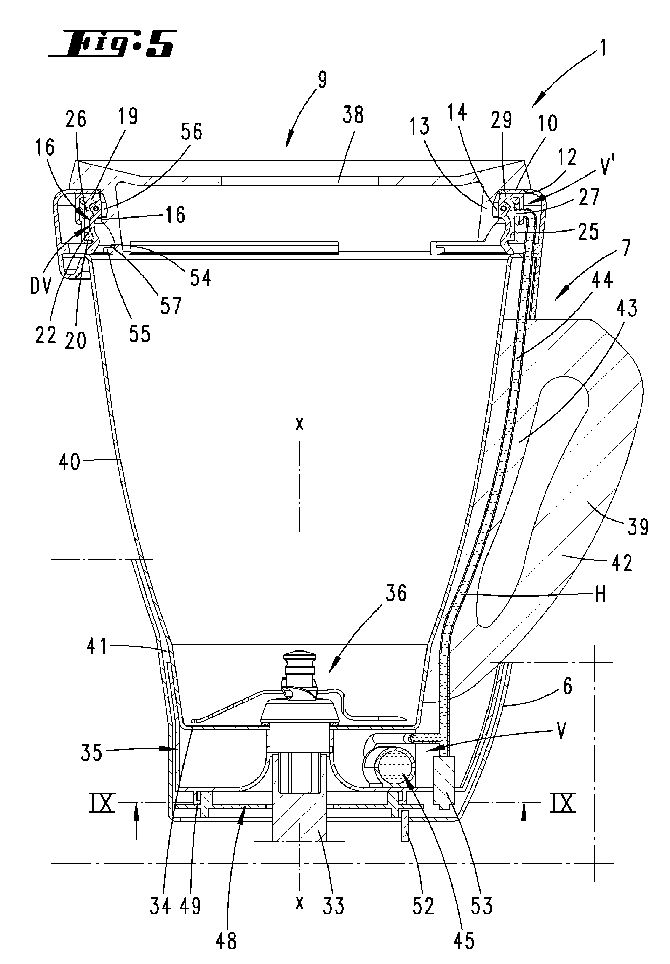

Der Deckel 9 ist unterseitig, d.h. in Zuordnungsstellung, dem Gefäßinnern zugewandt, mit einem sich im Wesentlichen koaxial zur Vertikalachse x erstreckenden Kragen 13 versehen. Dieser erstreckt sich in einem Vertikal-Querschnitt gemäß Fig. 5 leistenartig, unter Ausformung eines ersten Hintergriffs 14 im freien Endbereich. Dieser Hintergriff 14 ist gebildet durch eine am Kragen 13 angeformte, umlaufende und nach radial außen weisende Schulter 15.

Im Bereich des Öffnungsrandes 12 ist an dem Rührgefäß 7 eine im Wesentlichen nach radial innen gerichtete Dicht-/Verriegelungsanordnung DV vorgesehen. Diese dient in der Deckelzuordnungsstellung der Verriegelung desselben sowie der Abdichtung.

Die Dicht-/Verriegelungsanordnung DV weist zunächst eine Dichtung 16 auf, welche im Bereich des Öffnungsrandes 12 gehaltert ist. Die Dichtung 16 setzt sich zusammen aus einem Weichkunststoffteil 17 und einem Hartkunststoffteil 18, wobei das Weichkunststoffteil 17 zum Dichten und Verriegeln unter Zusammenwirkung mit dem deckelseitigen Hintergriff 14 ausgelegt ist.

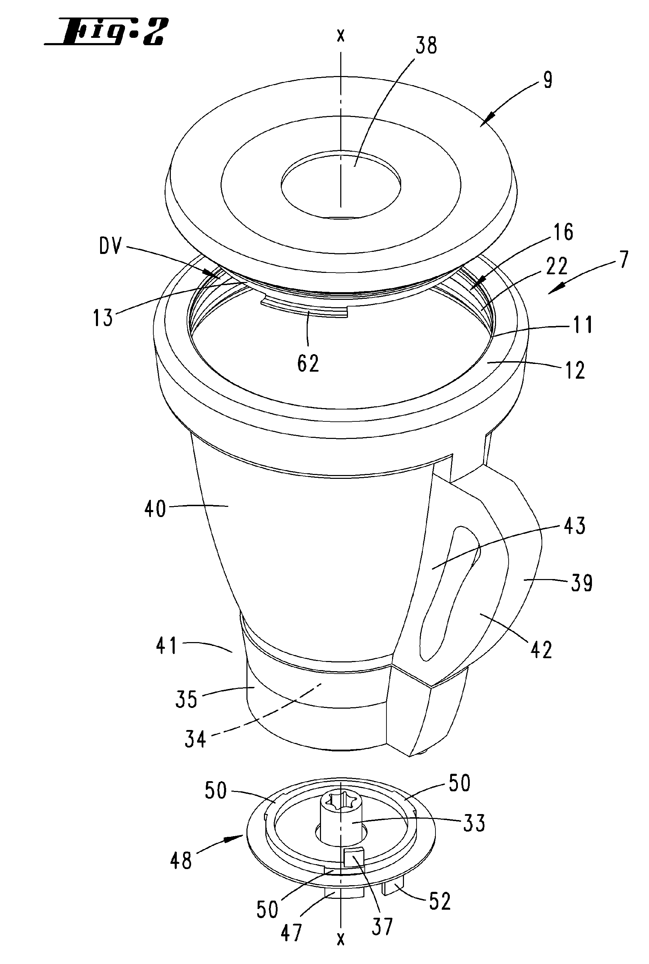

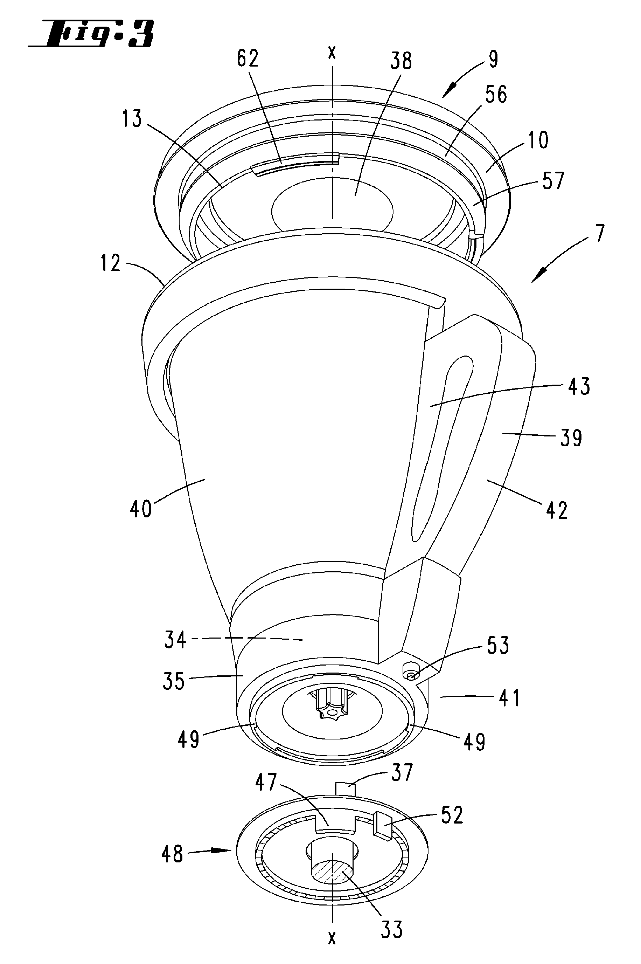

Das Weichkunststoffteil 17 ist mit Bezug auf einen Vertikal-Querschnitt im Wesentlichen U-förmig gestaltet, mit zwei in Vertikalrichtung zueinander beabstandeten U-Schenkeln 19, 20 und einem die U-Schenkel verbindenden U-Steg 21, der sich in einer Grundstellung gemäß den Figuren 2 und 3 im Wesentlichen im Querschnitt vertikal erstreckt bzw. an einer Parallelen zur Vertikalachse x ausgerichtet verläuft.

Der U-Steg 21 ist in seinem vertikal oberen, den U-Schenkeln 19 zugewandten Abschnitt (etwa über die halbe vertikale Länge des U-Steges 21) gegenüber dem vertikal unteren Abschnitt des U-Steges 21 verdickt, bildet entsprechend ein massives Riegelelement 22 aus mit einer an einem Trapez angepassten Querschnittsflächenerstreckung, wobei in dem dargestellten Ausführungsbeispiel ein in radialer Richtung betrachtetes Breitenmaß des Riegelelementes 22 etwa dem 0,7-Fachen des vertikalen Erstreckungsmaßes entspricht. Etwa mittig des nach unten weisenden Trapezschenkels des Riegelelementes 22 wächst der untere Abschnitt des U-Steges 21 aus, welcher gegenüber dem Riegelelement 22 wesentlich dünnwandiger gestaltete ist, so bevorzugt mit einer Materialstärke, die etwa dem 0,3-Fachen der in radialer Richtung betrachteten Breite des Riegelelementes 22 entspricht. Darüber hinaus ist der so gebildete Anlenkungssteg 23 ausgehend von dem nach unten weisenden Schenkel des Riegelelementes 22 nach radial innen weisend S-förmig verlaufend gestaltet, dies weiter übergehend in den vertikal unteren U-Schenkel 20.

Entsprechend der vorbeschriebenen Anordnung von U-Schenkeln 19, 20 und U-Steg 21 ist die hierdurch begrenzte U-Öffnung des Weichkunststoffteils 17 nach radial außen weisend. In diese U-Öffnung ist das Hartkunststoffteil 18 eingesetzt.

Zwischen dem Stützprofil 25 bzw. dem Hartkunststoffteil 18 und dem U-Steg 21 des Weichkunststoffteiles 17 ist ein Hohlraum 26 belassen, der sich zufolge der rotationssymmetrischen Ausgestaltung der Dicht- / Verriegelungsanordnung DV als Ringraum darstellt. Dieser Hohlraum 26 ist zufolge der dichtenden Anlage des Weichkunststoffteiles 17 an den Schenkeln des im Vertikalquerschnitt im Wesentlichen C-förmigen Stützprofils 25 geschlossen bis auf eine nach radial außen geführte Zugangsöffnung 27. Letztere durchsetzt das Profil 25 sowie einen der Halterung des vertikal oberen U-Schenkels 19 dienenden, das Stützprofil 25 radial außen umfassenden Wandungsabschnitt 28 des Gefäßes 7. Ein deckelartig festgelegtes Gehäusebauteil 29 überfängt den Wandungsabschnitt 28.

Im Bereich des Riegelelementes 22 ist in der Dichtung 16 bzw. in dem Weichkunststoffteil 17 eine bevorzugt aus einem Federstahl bestehende Feder 30 in Form einer Druckschraubenfeder integriert angeordnet, dies weiter bspw. zufolge Umspritzen mit dem Weichkunststoffmaterial zur Herstellung der Dichtung 16. Die Feder 30 erstreckt sich entsprechend koaxial zur Vertikalachse x ringförmig.

Zufolge der rotationssymmetrischen Ausgestaltung des Rührgefäßes 7, insbesondere im Bereich des Öffnungsrandes 12 sowie der entsprechenden Ausgestaltung des Deckels 9 ist ein ungerichtetes, d.h. wahlloses Auflegen des Deckels 9 auf dem Rührgefäß 7 ermöglicht. Dieses Aufsetzen erfolgt ohne Überwindung einer Dichtungsvorspannung. Dies bedingt dadurch, dass der Außendurchmesser der kragenseitigen Schulter 15 gleich, bevorzugt geringer, bemessen ist als der kleinste Innendurchmesser der Dichtung 16 im Bereich des Riegelelementes 22 in der in Fig. 5 dargestellten Grundstellung.

Das Rührgefäß 7 ist weiter bevorzugt zum einhändigen Ergreifen desselben mit einem sich vertikal erstreckenden Griff 39 versehen. Dieser liegt hierbei an der Gefäßwandung 40 an und erstreckt sich im Wesentlichen ausgehend von einem Fußbereich 41 bis in die Ebene der Gefäßöffnung 11, in welchem Bereich der Griff 39 radial außen an dem Wandungsabschnitt 38 befestigt ist.

Der Griff 39 formt einen zum Fingerdurchgriff freigestellten Greifbereich 42 aus, sowie einen sich an der Gefäßwandung 40 anlehnenden Stützbereich 43. Letzterer ist durchsetzt von einer sich im Wesentlichen in Vertikalrichtung erstreckenden Leitungsverbindung 44, bevorzugt in Form einer starren und somit druckfesten Rohrverbindung. Die Leitungsverbindung 44 ist druckfest und dicht einerends angeschlossen an die hohlkammerseitige Zugangsöffnung 27 und über diese an den ringförmig umlaufenden Hohlraum 26.

Anderendig, d.h. im Fußbereich 41 ist die Leitungsverbindung 44 druckfest und dicht angeschlossen an ein Komprimierungsteil 45. In dem dargestellten Ausführungsbeispiel handelt es sich hierbei um eine Kolben-Zylinder-Anordnung.

Das Komprimierungsteil 45 ist im Fußbereich 41 des Rührgefäßes 7, weiter insbesondere unterhalb des Rührgefäßbodens 34 innerhalb eines, den Rührgefäßboden 34 unterseitig überfangenden Bodentopfes 35 angeordnet derart, dass eine Zentralachse des Komprimierungsteils 45 quergerichtet ist zu der Vertikalachse x des Rührgefäßes 7, weiter insbesondere in Horizontalrichtung gerichtet. Der Zylinder des Komprimierungsteils 45 erstreckt sich weiter in dem belassenen Hohlraum konzentrisch zur Mittelachse.

Das Komprimierungsteil 45 ist einerends fluid- und druckdicht mit der Leitungsverbindung 44 verbunden. Innerhalb des Zylinders des Komprimierungsteils 45 ist ein gegenüber der Innenwandung des Zylinders abgedichteter Kolben mit Bezug auf die Mittelachse x in Umlaufrichtung verlagerbar, wozu dessen nach außen weisende Kolbenstirnfläche 45' zur Beaufschlagung frei liegt.

Das Komprimierungsteil 45 bildet zusammen mit der Leitungsverbindung 44 und dem im Bereich der Dichtung ringförmig umlaufenden Hohlraum 26 ein geschlossenes System, insbesondere ein geschlossenes Hydrauliksystem, welches entsprechend der vorbeschriebenen Ausgestaltung integraler Bestandteil des Rührgefäßes 7 ist.

Entsprechend ist das System bevorzugt vollständig mit einer inkompressiblen Hydraulikflüssigkeit H gefüllt. Es stellt sich entsprechend ein fußseitiger Hydraulikmittelvorrat V ein, der über die Leitungsverbindung 44 mit einem öffnungsrandseitigen Hydraulikmittelvorrat V' verbunden ist.

In der in die Rührgefäßaufnahme 6 der Küchenmaschine 1 eingesetzten Nutzungsstellung des Rührgefäßes 7 liegt das pumpenartig wirkendes Komprimierungsteil 45 in Zuordnungsstellung zu einem in der Küchenmaschine 1 im Bereich der Rührgefäßaufnahme 6, weiter bevorzugt im Bereich einer zum Rührgefäßboden 34 parallel verlaufenden Aufnahmeebene vorgesehenen Stellteil 48. Dieses Stellteil 48 ist als Drehscheibe ausgebildet, zur Ermöglichung einer quer zur Vertikal-Mittelachse x gerichteten Drehbewegung relativ zu dem Rührgefäß 7. Das als Drehscheibe ausgebildete Stellteil 48 ist aufnahmeseitig der Küchenmaschine 1 drehbar gehaltert und ist weiter zentral durchsetzt vom maschinenseitigen Rührwerkantrieb 33.

Auf dem Stellteil bzw. auf der Drehscheibe ist ein stegartiger Eingriffsabschnitt 37 befestigt. Dieser durchsetzt in der Zuordnungsstellung des Rührgefäßes 7 in der Rührgefäßaufnahme 6 eine konzentrisch zur Mittelachse x in Umlaufrichtung verlaufende Schlitzführung 46. Diese Schlitzführung 46 ist im Bereich des Bodentopfes 35 ausgebildet, weiter zugeordnet dem Bereich des Zylinders des Komprimierungsteiles 45.

Dem Eingriffsabschnitt 37 gegenüberliegend, d.h. unterseitig des scheibenförmigen Stellteils 48, ist weiter ein zu detektierender Steg 47 angeformt. In dessen Drehweg ist zugeordnet der Außenfläche des Steges 47 geräteseitig, d.h. weiter bevorzugt angeordnet in der Rührgefäßaufnahme 6, ein Sensor in Form eines Wegmessers 52 vorgesehen. Letzterer ist fest angeordnet, so dass zufolge einer Drehung des Stellteiles 48 um die zentrale Mittelachse x des Rührgefäßes 7 eine Relativverlagerung des Steges 47 zum Wegmesser 52 erreicht wird.

Das Rührgefäß 7 ist in der Rührgefäßaufnahme 6 fußseitig verriegelbar. Hierzu weist das Rührgefäß 7 unterseitig des fußseitig angeordneten, den Hohlraum für das Komprimierungsteil 45 anbietenden Bodentopfes 35 Hakenabschnitte 49 auf, zur Zusammenwirkung mit stellteilseitigen Haken 50. Die Hakenabschnitte 49 wie auch die Haken 50 sind jeweils in Umfangsrichtung mit Bezug zu der Mittelachse x angeordnet, wobei in Umfangsrichtung betrachtet sowohl die Hakenabschnitte 49 als auch die Haken 50 jeweils zwischen zwei benachbarten Hakenabschnitten 49 bzw. Haken 50 Freiräume belassen. Die Freiräume zwischen zwei benachbarten Hakenabschnitten 49 sind in Umfangsrichtung so bemessen, dass in den hierdurch gegebenen Freiraum jeweils ein oberseitig, d.h. auflageseitig des Stellteils 48 befestigter Haken 50 eintauschen kann.

Die Verriegelung des Rührgefäßes 7 wird erreicht zufolge Drehen des Stellteiles 48 um die Achse x, womit eine Übergriffstellung der Haken 52 zu den Hakenabschnitten 49 des Rührgefäßes 7 erreicht wird, dies weiter in Art einer Bajonettverriegelung.

Die Haken 50 des Stellteiles 48 sind in der Verriegelungsstellung relativ zu den zugeordneten Hakenabschnitten 49 des Rührgefäßes 7 drehbewegbar, dies weiter unter Einhaltung des Verriegelungszustandes. Diese Relativbewegung erlaubt die zur Beaufschlagung des Komprimierungsteils 45 nötige Verlagerung des stellteilseitigen Eingriffsabschnittes 37 in der Rührgefäßverriegelungsstellung. Diese Beaufschlagung des Komprimierungsteils 45 mittels des stellteilseitigen Eingriffabschnittes 37 zur Verriegelung des Deckels 9 ist nur in der Rührgefäß-Verriegelungsstellung möglich.

Weiter zugeordnet der Leistungsverbindung 44, weiter bevorzugt zugeordnet dem fußteilseitigen Hydraulikmittelvorrat V, ist ein Drucksensor 53 innerhalb des Bodentopfes 35 vorgesehen. Dieser Drucksensor 53 besitzt eine Signalverbindung zur Küchenmaschine 1, wie auch der vorbeschriebene Wegmesser 52. So ist weiter bevorzugt der Drucksensor 53 in der Rührgefäß-Verriegelungsstellung über eine nicht dargestellte elektrische Kontaktierung mit einer Auswerteeinheit der Küchenmaschine 1 verbunden.

Der in der Rührgefäßverschlussstellung in das Rührgefäßinnere einragende, koaxial zur Vertikalachse x sich erstreckende Kragen 13 des Deckels 9 erstreckt sich in Vertikalrichtung nach vertikal unten über den für die ordnungsgemäße Verriegelung zu nutzenden Hintergriff 14 hinaus, zur Ausbildung eines mit vertikalem Versatz zu dem ersten Hintergriff 14 vorgesehenen zweiten Hintergriffs 54. Auch dieser Hintergriff 54 ist gebildet durch eine am freien Ende des Kragens 13 angeformte, partiell umlaufend und nach radial außen weisende Schulter 55, welche Schulter 55 einen Außendurchmesser aufweist, der im Wesentlichen dem Außendurchmesser der dem ersten Hintergriff zugeordneten Schulter 15 entspricht.

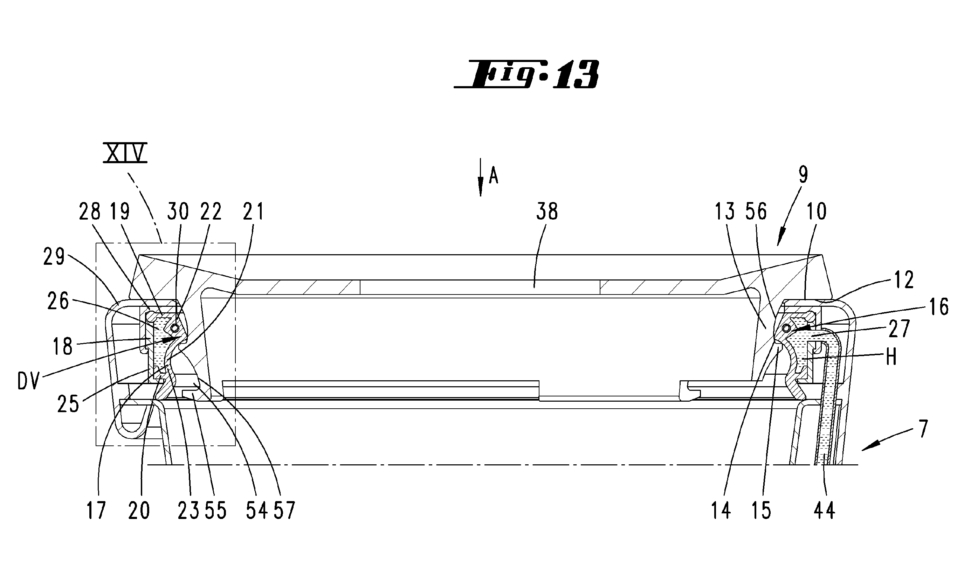

Wie weiter bspw. aus der Schnittdarstellung in Fig. 13 zu erkennen, ist der Hintergriff 54 über den Umfang betrachtet segmentiert. So sind in dem darstellten Ausführungsbeispiel bevorzugt über den Umfang gleichmäßig verteilt drei Hintergriffbereiche mit entsprechenden Abschnitten der Schulter 55 ausgebildet, wobei der Abstand zweier benachbarter Hintergriffe 54 in Umfangsrichtung betrachtet größer ist als das in Umfangsrichtung betrachtete Erstreckungsmaß eines Hintergriffes 54 bzw. einer Schulter 55.

Zufolge der vorbeschriebenen Lösung ergeben sich wandungsaußenseitig des Kragens 13 zwei in Vertikalrichtung übereinander angeordnete Haltenuten. So zunächst eine vertikal obere Verriegelungsnut 56, welche sich zwischen dem Randbereich 10 des Deckels 9 und dem ersten Hintergriff 14 bzw. der Schulter 15 erstreckt und eine vertikal untere Nothaltenut 57 zwischen der Schulter 15 und der kragenendseitigen Schulter 55.

Jede Schulter 15, 55 weist weiter - mit Bezug auf eine Deckelaufsetzstellung - eine nach vertikal oben weisende, im Wesentlichen sich jeweils in einer Horizontalebene erstreckende Schulterfläche 58 bzw. 59 auf. Diese ist mit Bezug auf einen Grundriss kreisringförmig bzw. kreisringabschnittsförmig gestaltet, erstreckt sich weiter in einem vertikalen Querschnitt ausgehen vom jeweiligen freien Ende der Schulter 15 bzw. 55 nach radial innen bis hin zu einer Hintergriffwandung 60, 61. Jede Hintergriffwandung 60, 61 verläuft mit Bezug auf einen vertikalen Querschnitt gemäß Fig. 13 ausgehend von der zugeordneten Schulterfläche 58 bzw. 59 nach vertikal oben, dies weiter bei einer Neigung zufolge Krümmung der Wandung nach radial außen. So schließt die der Nothaltenut 57 zugeordnete Hintergriffwandung 61 ausgehend von der radial inneren Begrenzung der Schulter 55 anderends an an das radial äußere Ende der oberhalb und vertikal zu der Schulter 55 beabstandeten Schulter 15.

Auch die Hintergriffwandung 60 der Verriegelungssnut 56 verläuft in vergleichbarer Form wie die Hintergriffwandung 61, so entsprechend ausgehend von einem radial inneren Endbereich der Schulter 15 nach vertikal oben in Richtung auf den Randbereich 10 des Deckels 9, dies weiter entsprechend unter einer Neigung zufolge kreisabschnittsförmigen Verlaufs der Hintergriffswandung 60 nach radial außen.

Zufolge der zuvor beschriebenen Ausgestaltung der Hintergriffwandungen 60 und 61 bieten diese in Aufsetzrichtung des Deckels 9 (vgl. Pfeil A) ablaufschrägenartige Nutböden an.

Auch die in Aufsetzrichtung A nach unten weisende freie Fläche der Schulter 55 ist mit einer nach radial außen ansteigenden Steuerfläche 62 versehen.

In der ordnungsgemäßen Deckelauflagestellung liegt der Deckelrandbereich 10 bevorzugt plan auf den zugeordneten Öffnungsrand 12 des Rührgefäßes 7 auf. Die kragenseitige Radialschulter 15 des Deckels 19 ist vertikal unterhalb des Riegelelements 22 positioniert.

Die Verriegelung des Deckels 9 erfolgt durch Einbringen der Hydraulikflüssigkeit H durch die Zugangsöffnung 27 in den Hohlraum 26. Hierzu wird bevorzugt zufolge Tastendruck über eine weitere in dem Bedienfeld 2 vorgesehene Taste die Küchenmaschine 1 in Betrieb genommen. Hierdurch wird ein in der Küchenmaschine 1 vorgesehener, bevorzugt gesondert vorgesehener Elektromotor 63 aktiviert, der bevorzugt über ein Zahnrad 64 mit einer unterseitig des Stellteiles 48 ausgeformten Verzahnung 65 zusammenwirkt.

Zufolge der Aktivierung des Elektromotors 63 wird über die Zahnradverbindung das Stellteil 48 um die Achse x drehbewegt, dies weiter bevorzugt über einen vorgegebenen Verlagerungsweg. Weiter bevorzugt ist die Drehbewegung des drehscheibenfömigen Stellteils 48 anschlagbegrenzt, weiter bspw. zufolge Anschlagen der stellteilseitigen Haken 50 an zugeordneten Abschnitten der rührgefäßseitigen Hakenabschnitte 49.

Bei der Drehverlagerung des Stellteils 48 wird zugleich eine Verriegelung des Rührgefäßes 7 in der Rührgefäßaufnahme 6 erreicht und eine Beaufschlagung des Komprimierungsteiles 45 durch den stellteilseitigen Eingriffsabschnitt 37. Hierdurch wird das Medium, hier die Hydraulikflüssigkeit H, durch die Leitungsverbindung 44 in den ringförmig umlaufenden Hohlraum 26 im Bereich der Dichtung 16 gepumpt. Bei diesem Umpumpen wird soviel Hydraulikflüssigkeit H durch die Leitungsverbindung 44 in den Hohlraum 26 gefördert, dass die Dichtung, insbesondere das Weichkunststoffteil 17 der Dichtung, eine Umformbewegung durchführt zur Verriegelung des Deckels 9 sowie zur zeitgleichen Abdichtung, indem das Weichkunststoffteil 17 bzw. das hierdurch gebildete Riegelelement 22 in die Verriegelungsnut 56 des Deckels 9 eintaucht.

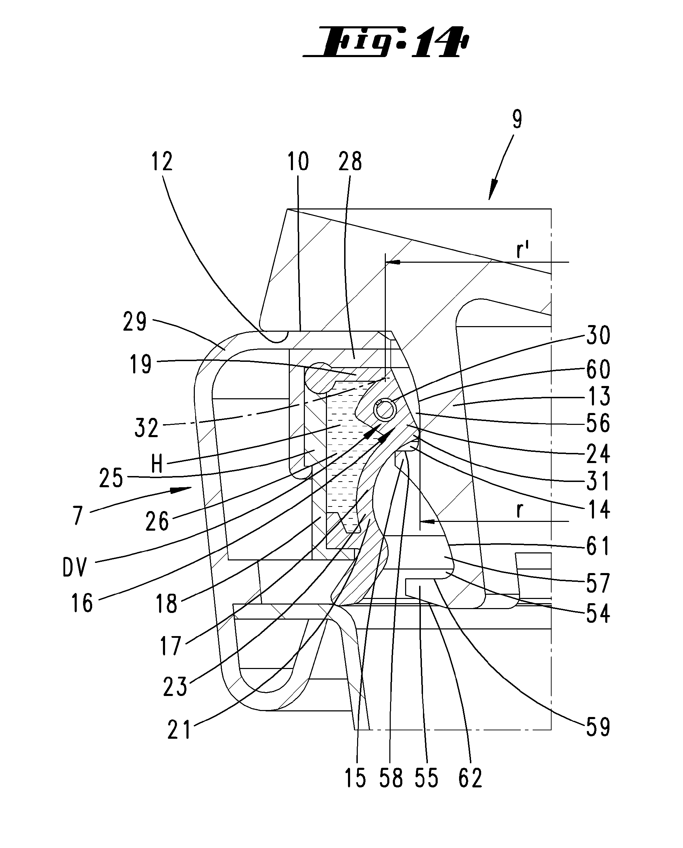

Zufolge der Druckbeaufschlagung wölbt sich der U-Steg 21, insbesondere der das Riegelelement 22 ausformende Abschnitt desselben, nach radial innen mit Bezug auf die Vertikalachse x aus. Hierbei beschreibt ein nach unten und radial nach innen weisender Sperrzahn 31 des Riegelelementes 22 eine Kreisbahn um den im Übergangsbereich vom vertikal oberen U-Schenkel 19 zu dem Riegelelement 22 sich einstellenden Drehpunkt 32, woraufhin der Sperrzahn 31 in linienförmiger Dichtanlage gegen den Kragen 13 des Deckels 9 tritt (vgl. Fig. 14). Hierbei überfährt der Sperrzahn 31 zugleich die nach radial außen weisende Schulter 15, zufolge dessen der durch die Schulter 15 gebildete Hintergriff 14 den Sperrzahn 31 bzw. den in Rotationsrichtung umlaufenden Sperrzahn unterfängt, welcher Sperrzahn 31 radial innen bevorzugt linienförmig umlaufend gegen die Hintergriffwandung 60 tritt. Neben der gewünschten Abdichtung ist hierdurch zugleich eine Verriegelung des Deckels 9 gegen Abheben desselben entgegen der Aufsetzrichtung A erreicht.

In dem in der Figur 14 dargestellten Belastungsfall, in welchem zufolge einer Druckerhöhung innerhalb des Rührgefäßes 7 der Deckel 9 geneigt ist nach vertikal oben auszuwandern, wird die Verschlussbewegung des Sperrzahnes 31 bzw. des Riegelelementes 22 unterstützt, so dass sich ein Selbstsperreffekt einstellt. Dies ist insbesondere dadurch bedingt, dass im gesperrten Zustand die Kreislinie der entlang des Sperrzahnes 31 gebildeten Dichtkante, in welchem Bereich zugleich auch der Kraftangriff bei einem Rührgefäß-Innendruck wirkt, eine mit Bezug auf die Vertikalachse x kleineren Radius r beschreibt als die Kreislinie durch den Drehpunkt 32 des Sperrzahns 31 (Radius r'). Dies lässt auf den Sperrzahn 31 ein selbstschließendes Drehmoment mit Bezug auf die Darstellungen entgegen des Uhrzeigersinns wirken. Zufolge dieser Ausgestaltung bleibt die Sperrung in der Deckelsperrstellung auch bei einem Betriebsdruckversagen der Hydraulik erhalten. Erst mit einem Abfall des Rührgefäß-Innendrucks auf bevorzugt 0 bar und abgebautem Hydraulikdruck verbringt die eingebettete Feder 30 das Riegelelement 22 in die Ausgangsstellung zurück.

Es ist entsprechend eine Dichtung angegeben mit fest zugewiesenen Gelenkpunkten, die eine besonders präzise Funktionsweise, insbesondere eine Selbstsperrung und Rückstellmöglichkeit anbietet.

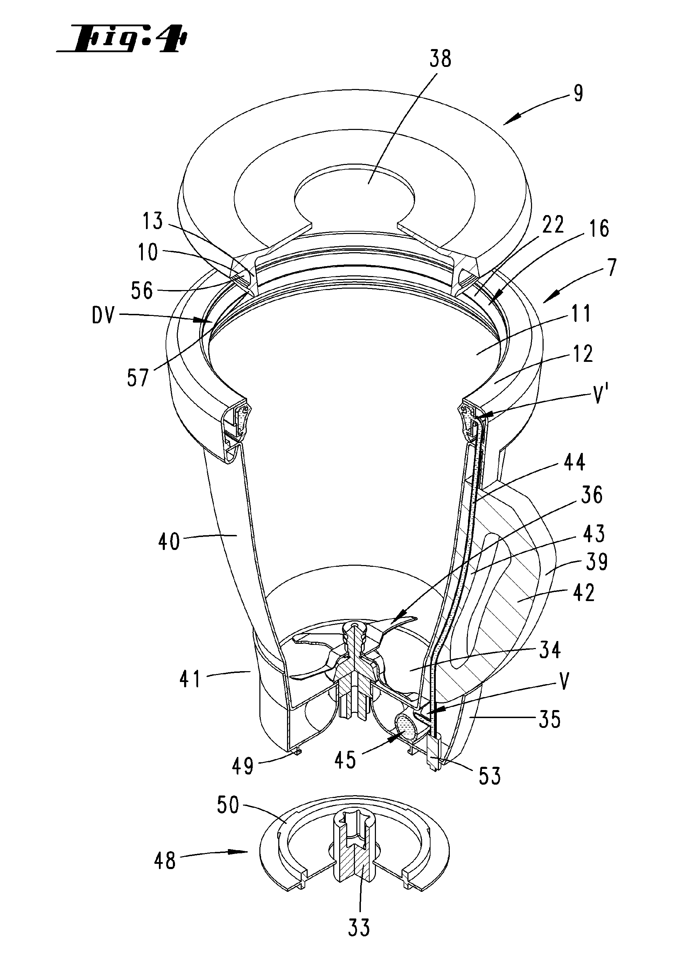

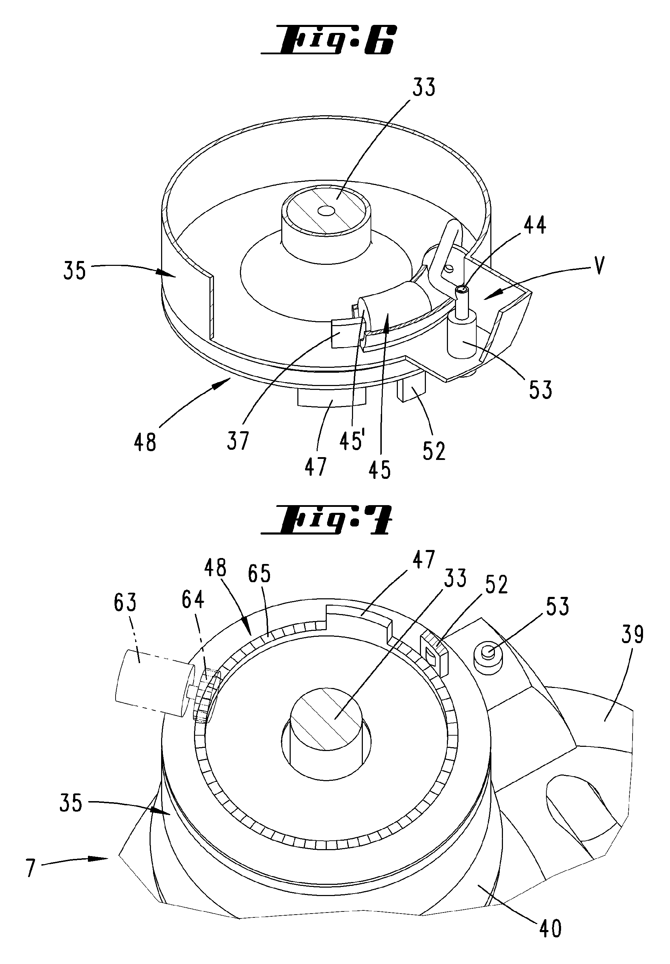

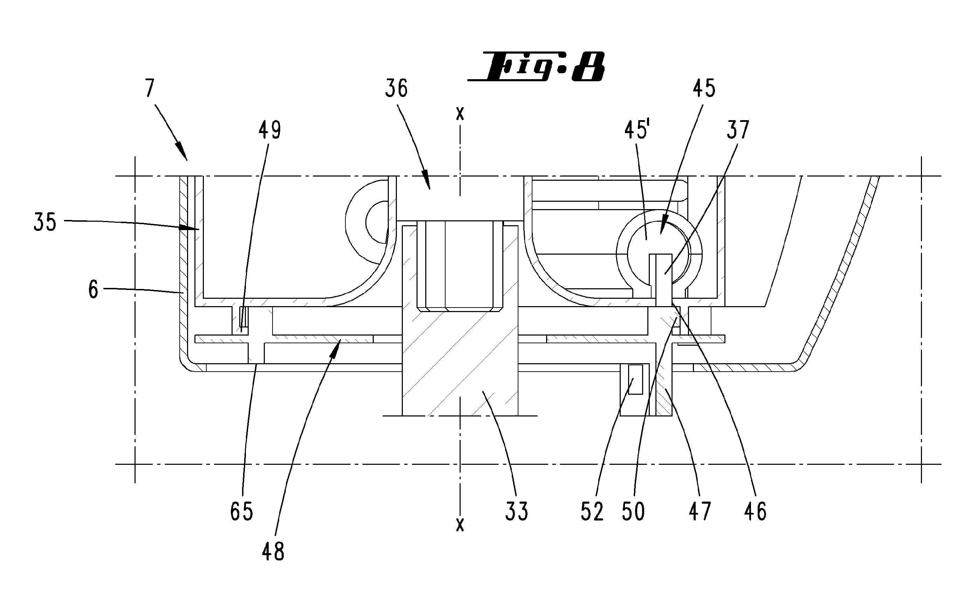

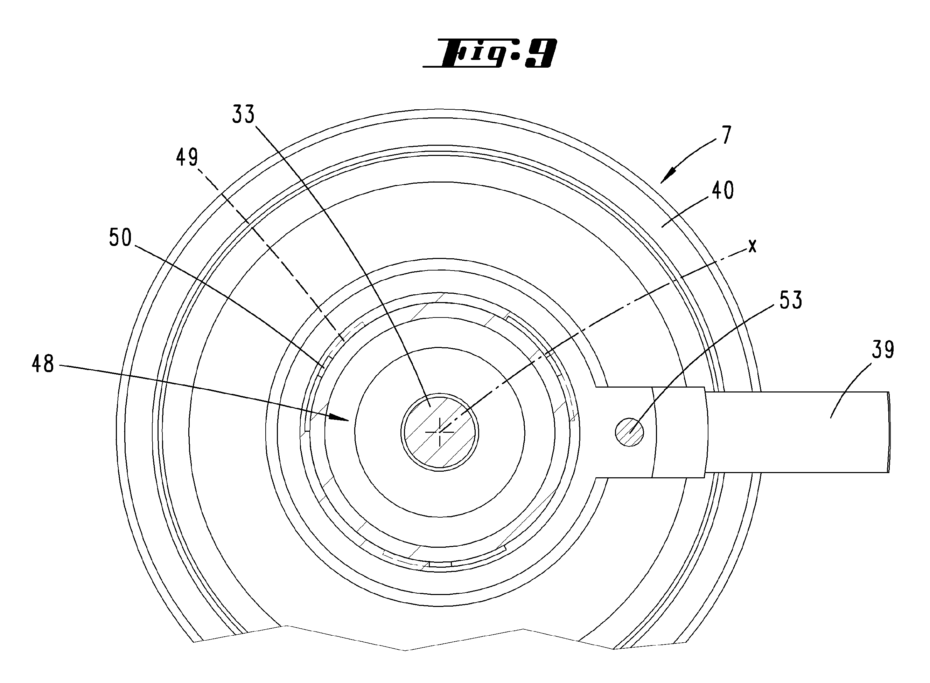

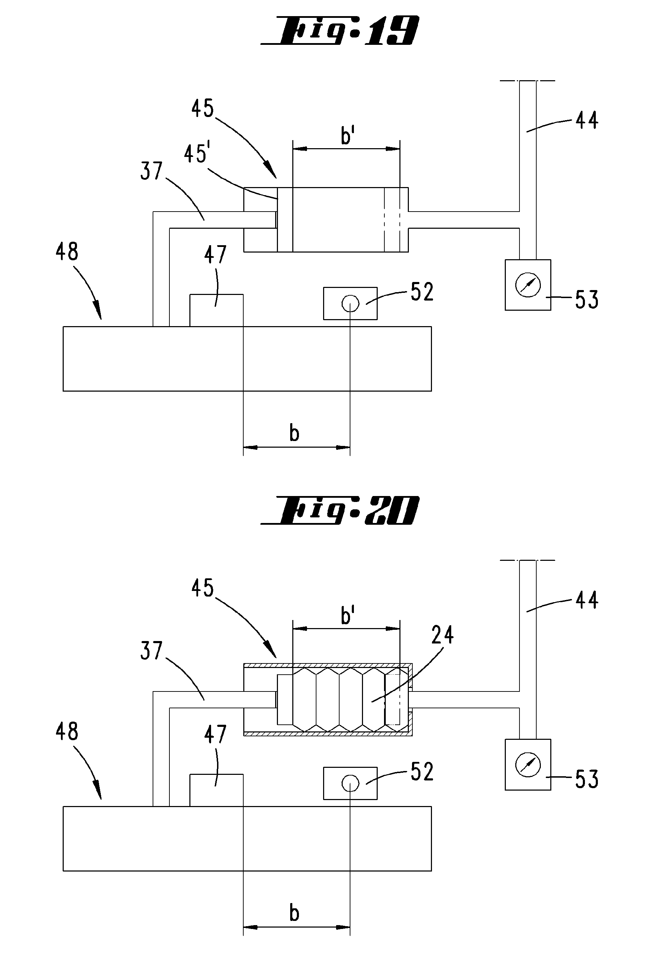

Über eine Abfolgeüberwachung ist eine sichere und ordnungsgemäße Deckelverriegelungsstellung ermöglicht. Diese ordnungsgemäße Deckelverriegelungsstellung wird überwacht über den rührgefäßseitigen Drucksensor 53 sowie über den Wegmesser 52, der bei ordnungsgemäßer Verriegelung den entsprechend drehverlagerten Steg 47 des Stellteiles 48 erfasst. Ausgehend von einer Grundstellung gemäß den Figuren 1 bis 9, in welcher noch keine Drehbewegung des Stellteiles 48 durchgeführt ist, vollzieht der stellteilseitige Steg 47 bis zur Erfassung durch den Wegmesser 52 einen Weg b, der dem Hubweg b' des Kolbens in dem Zylinder des Komprimierungsteiles 45 entspricht (vgl. schematische Darstellung in Fig. 19). Zeitgleich wird mittels des Drucksensors 53 der Druck im Hydraulikmittelvorrat gemessen und an die Küchenmaschine 1 übermittelt. So ist bei einem ermittelten Hydraulikdruck von 0 bar das System offen, d.h. nicht hinsichtlich einer Verriegelung aktiviert. Bei einem Druckwert von bevorzugt 0,6 bar ist das System deckelverschlossen. Zudem wird eine zeitliche Überprüfung der Reihenfolge der zu erreichenden Messwerte von Wegmesser 52 und Drucksensor 53 durchgeführt. Eine ordnungsgemäße Deckelverriegelung gemäß den Darstellungen 10 bis 14 ist erreicht, wenn zeitlich versetzt zunächst die vorgegebene Endstellung des Stellteils 48 erreicht ist und hiernach der vorgegebene Hydraulikdruck.

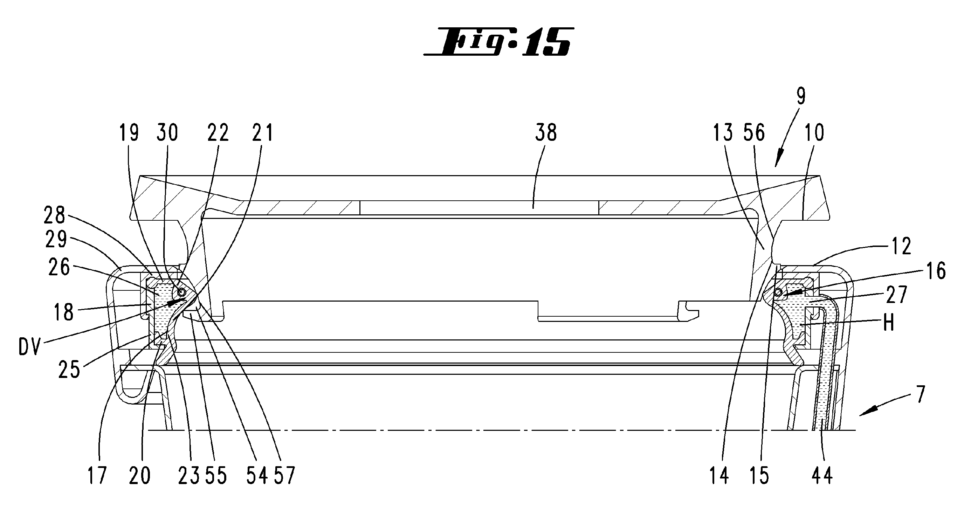

Ist der Deckel 9 bspw. nicht korrekt aufgesetzt, d.h. nicht gänzlich in Aufsetzrichtung A auf den Gefäßrand aufgelegt derart, dass mit Betätigung der Verriegelungseinrichtung die Dichtung 16 bzw. das Riegelelement 22 in die Nothaltenut 57 einfährt, so ist zufolge der durchmesserverringerten Ausgestaltung der zugeordneten Hintergriffwandung 61 gegenüber der Hintergriffwandung 60 der Verriegelungsnut 56 ein weiteres radiales Einfahren des Riegelelementes 22 ermöglicht (vgl. Fig. 15). Das aktivierte Stellteil 48 kann in dieser Deckelstellung den üblichen, auch durch den Wegmesser 52 erfassten Verlagerungsweg b vollziehen; der Hydraulikdruck hingegen erreicht zufolge weiteren radialen Ausweichens des Riegelelementes 22 nicht den vorgegebenen Wert. So erfasst der Drucksensor 53 in dieser Nothalte-Riegelstellung des Deckels 9 einen maximalen Wert von bevorzugt 0,3 bar, welcher Messwert auf die nicht korrekte Deckelpositionierung rückschließen lässt. Bevorzugt ist in dieser Deckel-Nothaltestellung das Rührwerk 36 in dem Rührgefäß 7 nicht aktivierbar oder alternativ nur mit einer verminderten Drehzahl betreibbar.

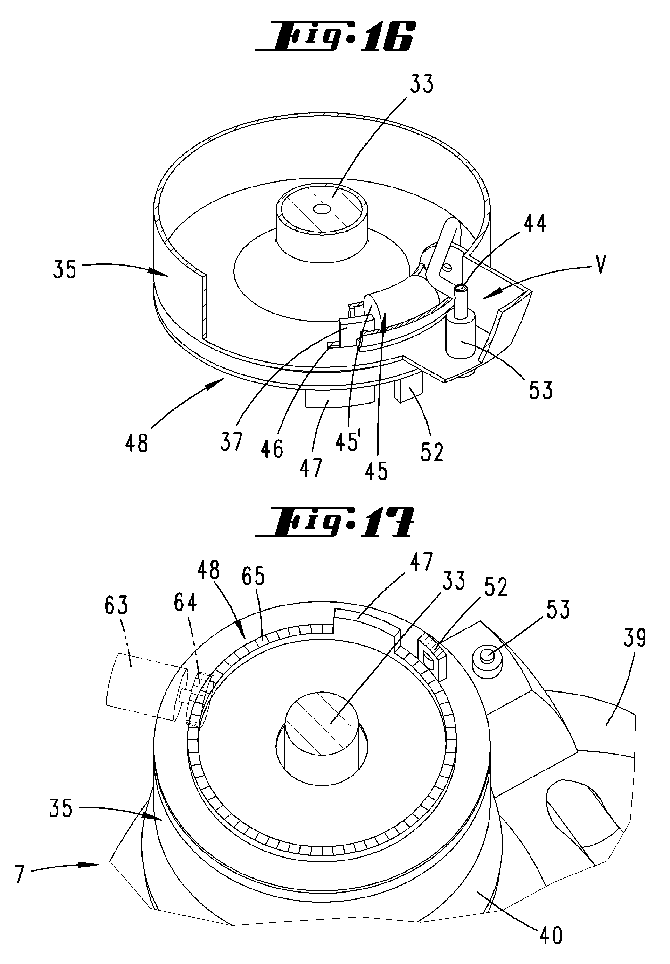

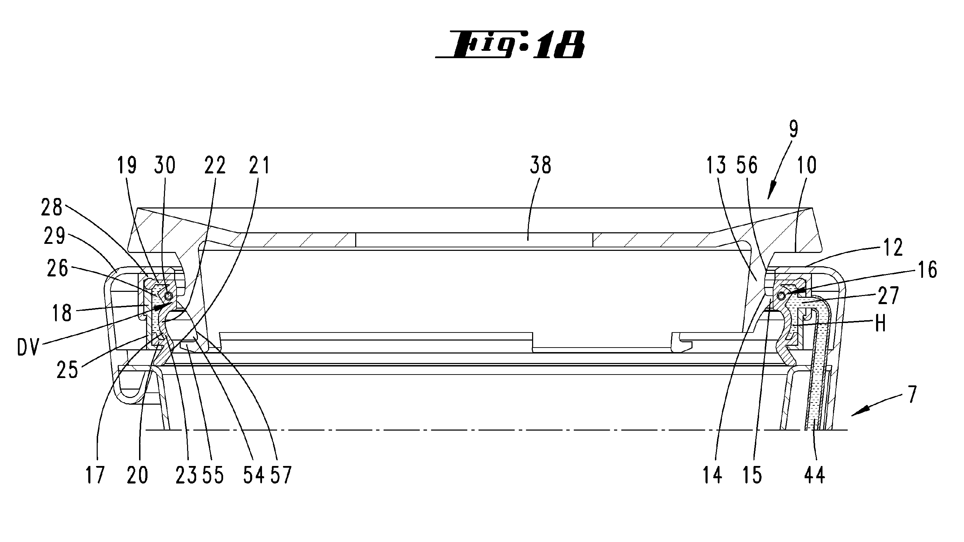

Die Figuren 16 bis 18 zeigen eine weitere Deckelfehlstellung, in welcher beim Versuch einer Deckelverriegelung das Riegelelement 22 gegen die sperrende Schulter 15 des ersten Hintergriffs 14 tritt, womit einer Radialverlagerung des Riegelelementes 22 nach radial innen entgegengewirkt ist. Entsprechend wird zufolge der so erreichten Abstützung zwar bei entsprechender Drehverlagerung des Stellteils 48 und damit einhergehender Beaufschlagung des Komprimierungsteiles 45 der vorgegebene Hydraulikdruck von bevorzugt 0,6 bar erreicht, dies jedoch zeitlich betrachtet bevor der über den Wegmesser 52 erfasste Hubweg b' bzw. der Verlagerungsweg b vollständig erreicht werden kann. Auch hierdurch ist eindeutig die Deckelfehlstellung detektiert, was zu den vorbeschriebenen Maßnahmen, insbesondere zum Abschalten des Rührwerks 36 führt.

Die jeweiligen Deckelfehlstellungen bzw. das Fehlen eines Deckels, was bei einer Verriegelungsauslösung ein entsprechend unbeeinflusstes Verlagern des Riegelelementes 22 nach radial innen auslöst, womit auch hier nicht der in der Deckelverriegelungsstellung sich ergebende Hydraulikdruck von bevorzugt 0,6 bar erreicht wird, wird bevorzugt auf den Display 5 als Störung angezeigt.

In der ordnungsgemäßen Deckelverriegelungsstellung wird der auf die Dichtung 16 bzw. auf das Weichkunststoffteil 17 einwirkende Hydraulikdruck während der gesamten Betriebsdauer beibehalten, dies unter entsprechender Beaufschlagung des Komprimierungsteiles 45 durch den stellteilseitigen Eingriffabschnitt 37. Mit Ausschalten der Küchenmaschine 1 verfährt das Stellteil 48 mit seinem Eingriffsabschnitt 37 zurück in die Ausgangsstellung, dies unter Freigabe des Kolbens des Komprimierungsteiles 45. Zufolge der hierbei aufgehobenen Druckbeaufschlagung des Hydrauliksystems stellt sich dieses selbsttätig zurück, dies weiter insbesondere unterstützt durch die in dem Weichkunststoffteil 17 vorgesehene Feder 30.

In besonders vorteilhafter Weise ist das über die Hydraulikflüssigkeit H zur Verriegelung des Deckels 9 dienende Komprimierungsteil 45 in der in die Rührgefäßaufnahme 6 der Küchenmaschine 1 eingesetzten Stellung des Rührgefäßes 7 nicht von außen zugänglich, ist entsprechen in einer Verstecklage gehalten, so dass einer Manipulation der Deckel-Verriegelungsmechanik entgegengewirkt ist.

Wie weiter schematisch in Fig. 20 dargestellt, kann das Komprimierungsteil 45 auch gebildet sein durch ein Balgelement 24, dessen Zentralachse, wie auch die der Kolben-Zylinder-Anordnung, quer gerichtet ist zu der Vertikalachse x des Rührgefäßes 7. Das Balgelement 24 liegt in einer Aufnahmekammer ein, wobei eine Balgstirnfläche zur Beaufschlagung durch den stellteilseitigen Eingriffsabschnitt 37 frei liegt. Der Balginnenraum ist angeschlossen an die Leitungsverbindung 44 und bietet weiter den fußseitigen Hydraulikmittelvorrat V an. Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Küchenmaschine
- 2: Bedienfeld
- 3: Regler
- 4: Taster
- 5: Display
- 6: Rührgefäßaufnahme
- 7: Rührgefäß
- 8: Netzanschlusskabel
- 9: Deckel
- 10: Randbereich
- 11: Gefäßöffnung
- 12: Öffnungsrand
- 13: Kragen
- 14: Hintergriff
- 15: Schulter
- 16: Dichtung
- 17: Weichkunststoffteil
- 18: Hartkunststoffteil
- 19: U-Schenkel
- 20: U-Schenkel
- 21: U-Steg
- 22: Riegelelement
- 23: Anlenkungssteg
- 24: Balgelement
- 25: Stützprofil
- 26: Hohlraum
- 27: Zugangsöffnung
- 28: Wandungsabschnitt
- 29: Gehäusebauteil
- 30: Feder
- 31: Sperrzahn
- 32: Drehpunkt
- 33: Rührwerkantrieb
- 34: Rührgefäßboden
- 35: Bodentopf
- 36: Rührwerk
- 37: Eingriffabschnitt
- 38: Einfüllöffnung
- 39: Griff
- 40: Gefäßwandung
- 41: Fußbereich
- 42: Greifbereich
- 43: Stützbereich
- 44: Leitungsverbindung
- 45: Komprimierungsteil
- 45': Kolbenstirnfläche
- 46: Schlitzführung
- 47: Steg
- 48: Stellteil
- 49: Hakenabschnitt
- 50: Haken
- 51: Taste
- 52: Wegmesser
- 53: Drucksensor
- 54: Hintergriff
- 55: Schulter
- 56: Verriegelungsnut
- 57: Nothaltenut
- 58: Schulterfläche
- 59: Schulterfläche
- 60: Hintergriffwandung
- 61: Hintergriffwandung
- 62: Steuerfläche
- 63: Elektromotor
- 64: Zahnrad
- 65: Verzahnung

- b: Verlagerungsweg
- b': Hubweg
- r: Radius
- r': Radius
- x: Vertikalachse

- A: Aufsetzrichtung
- DV: Dicht-/Verriegelungsanordnung
- H: Hydraulikflüssigkeit
- V: Hydraulikmittelvorrat
- V': Hydraulikmittelvorrat

## Patentansprüche

1. Elektromotorisch betriebene Küchenmaschine (1) mit einem Rührgefäß (7), das durch einen Deckel (9) verschließbar ist, wobei der Deckel (9) bei Betrieb der Küchenmaschine (1) relativ zu dem Rührgefäß (7) gegen Entfernen verriegelt ist, wobei weiter zwischen dem Deckel (9) und einem zugeordneten Öffnungsrand (12) des Rührgefäßes (7) bevorzugt eine Dichtung (16) angeordnet ist, **dadurch gekennzeichnet, dass** der Deckel (9) durch ein oder mehrere bewegbare Riegelelemente (22) verriegelbar ist, wobei die Riegelelemente (22) in einem an dem Deckel (9) oder an dem Rührgefäß (7) ausgebildeten Hintergriff (14) eingreifen und die Bewegung der Riegelelemente (22) durch einen an der Küchenmaschine (1) vorgesehenen Antrieb bewirkbar ist, der außerhalb des Rührgefäßes (7) angeordnet ist.

2. Zubereitungsgefäß, bspw. zum Kochen, Garen oder Dampfgaren von Speisen, das durch einen Deckel verschließbar ist, wobei der Deckel bei Benutzung relativ zu dem Zubereitungsgefäß gegen Entfernen verriegelt ist, wobei weiter zwischen dem Deckel und einem zugeordneten Öffnungsrand des Zubereitungsgefäßes bevorzugt eine Dichtung angeordnet ist, **dadurch gekennzeichnet, dass** der Deckel durch ein oder mehrere bewegbare Riegelelemente verriegelbar ist, wobei die Riegelelemente in einem, an dem Deckel oder an dem Zubereitungsgefäß ausgebildeten Hintergriff eingreifen und die Bewegung der Riegelelemente durch einen Antrieb bewirkbar ist, der außerhalb des Zubereitungsgefäßes angeordnet ist.

3. Küchenmaschine oder Zubereitungsgefäß nach Anspruch 1 oder Anspruch 2 oder insbesondere danach, **dadurch gekennzeichnet, dass** die Riegelelemente (22) hydraulisch oder pneumatisch oder mechanisch bewegbar sind.

4. Küchenmaschine oder Zubereitungsgefäß nach einem oder mehreren der vorhergehenden Ansprüchen oder insbesondere danach, **dadurch gekennzeichnet, dass** der Antrieb ein sich relativ zu dem Rührgefäß (7) oder dem Zubereitungsgefäß bewegbares Stellteil (48) aufweist, wobei, bevorzugt,das Stellteil (48) sich quer zu der Mittelachse (x) bewegt und/oder das Stellteil (48) eine Drehbewegung ausführt und/oder das Stellteil (48) als Drehscheibe mit einem Eingriffsabschnitt (37) ausgebildet ist.

5. Küchenmaschine oder Zubereitungsgefäß nach einem oder mehreren der vorhergehenden Ansprüchen oder insbesondere danach, **dadurch gekennzeichnet, dass** die Bewegung des Stellteils (48) jedenfalls hinsichtlich einer vorgegebenen Endstellung überwacht ist.

6. Küchenmaschine oder Zubereitungsgefäß nach einem oder mehreren der vorhergehenden Ansprüchen oder insbesondere danach, **dadurch gekennzeichnet, dass** das Riegelelement (22) über ein Fluid bewegbar ist und dass ein das Fluid beeinflussendes Komprimierungsteil (45) durch das Stellteil (48) beaufschlagt wird, wobei, bevorzugt, das Komprimierungsteil (45) eine Kolben-Zylinder-Anordnung ist und/oder der in dem Fluid zufolge Beaufschlagung erreichte Druck überwacht wird und/oder ein Drucksensor in dem Rührgefäß (7) bzw. in dem Zubereitungsgefäß angeordnet ist.

7. Küchenmaschine oder Zubereitungsgefäß nach einem oder mehreren der vorhergehenden Ansprüchen oder insbesondere danach, **dadurch gekennzeichnet, dass** zeitlich versetzt zunächst die vorgegebene Endstellung des Stellteils (48) erreicht wird und dann der vorgegebene Fluiddruck.

8. Küchenmaschine oder Zubereitungsgefäß nach einem oder mehreren der vorhergehenden Ansprüchen oder insbesondere danach, **dadurch gekennzeichnet, dass** das Rührgefäß (7) fußseitig in der Rührgefäßaufnahme (6) verriegelbar ist, wobei, bevorzugt, die Verriegelung durch das Stellteil (48) bewirkt wird und/oder an dem Rührgefäß (7) ein Hakenabschnitt (49) ausgebildet ist, der mit einem stellteilseitigen Haken (50) in Übergriff kommt.

9. Küchenmaschine nach den Merkmalen des Oberbegriffs des Anspruches 1 oder nach Anspruch 1, **dadurch gekennzeichnet, dass** der Deckel (9) durch ein oder mehrere unabhängig von einer Bewegung des Rührgefäßes radial bewegbare und an dem Rührgefäß (7) oder an dem Deckel (9) gelagerte Riegelelemente (22) verriegelbar ist, wobei die Riegelelemente (22) in einem, an dem Deckel (9) oder an dem Rührgefäß (7) ausgebildeten Hintergriff (14, 54) eingreifen und die Riegelelemente (22) an mindestens zwei umfangsmäßig beabstandeten Bereichen an dem Deckel (9) eingreifen, um den Deckel insgesamt gegen Entfernen zu sperren und dass der Hintergriff (14, 54) in Aufsetzrichtung (A) des Deckels (9) zweifach mit Versatz ausgebildet ist.

10. Zubereitungsgefäß, bspw. zum Kochen, Garen oder Dampfgaren von Speisen, das durch einen Deckel verschließbar ist, wobei der Deckel bei Benutzung relativ zu dem Zubereitungsgefäß gegen Entfernen verriegelt ist, wobei weiter zwischen dem Deckel und einem zugeordneten Öffnungsrand des Zubereitungsgefäßes bevorzugt eine Dichtung angeordnet ist, **dadurch gekennzeichnet, dass** der Deckel durch ein oder mehrere, unabhängig von einer Bewegung des Zubereitungsgefäßes radial bewegbare und an dem Zubereitungsgefäß oder an dem Deckel gelagerte Riegelelemente verriegelbar ist, wobei die Riegelelemente in einem, an dem Deckel oder an dem Zubereitungsgefäß ausgebildeten Hintergriff eingreifen und die Riegelelemente an mindestens zwei umfangsmäßig beabstandeten Bereichen an dem Deckel eingreifen, um den Deckel insgesamt gegen Entfernen zu sperren und dass der Hintergriff in Aufsetzrichtung des Deckels zweifach mit Versatz ausgebildet ist.

11. Küchenmaschine oder Zubereitungsgefäß nach Anspruch 17 oder 18 oder insbesondere danach, **dadurch gekennzeichnet, dass** die zwei in Aufsetzrichtung (A) des Deckels (9) versetzten Hintergriffe (14, 54) unterschiedliche Erstreckungen quer zur Aufsetzrichtung (A) aufweisen, wobei, bevorzugt, ein Hintergriff (54) so ausgebildet ist, dass das Riegelelement (22) in der Zusammenwirkungsstellung weiter in Radialrichtung vorfahren kann als in der Zusammenwirkungsstellung mit dem anderen Hintergriff (14) und/oder ein Hintergriff (54) in Umfangsrichtung betrachtet segmentiert ist.

12. Elektromotorisch betriebene Küchenmaschine (1) mit einem Rührgefäß (7), das vorzugsweise durch einen Deckel (9) verschließbar ist, wobei weiter das Rührgefäß (7) einer Rührgefäßaufnahme (6) der Küchenmaschine zuordbar ist, **dadurch gekennzeichnet, dass** das Rührgefäß (7) fußseitig in der Rührgefäßaufnahme (6) verriegelbar ist.

13. Küchenmaschine nach Anspruch 22 oder insbesondere danach, **dadurch gekennzeichnet, dass** die Verriegelung durch ein relativ zu dem Rührgefäß (7) bewegbares Stellteil (48) bewirkt wird, wobei, bevorzugt, das Stellteil (48) rührgefäßaufnahmeseitig vorgesehen ist und/oder das Rührgefäß (7) eine Mittelachse (x) aufweist und dass das Stellteil (48) sich quer zu der Mittelachse (x) bewegt.

14. Küchenmaschine nach einem oder mehreren der Ansprüche 22 bis 25 oder insbesondere danach, **dadurch gekennzeichnet, dass** das Stellteil (48) ein Drehbewegung ausführt.

15. Küchenmaschine nach einem oder mehreren der Ansprüche 22 bis 26 oder insbesondere danach, **dadurch gekennzeichnet, dass** an dem Rührgefäß (7) ein Hakenabschnitt (49) ausgebildet ist, der mit einem stellteilseitigen Haken (50) in Übergriff kommt.
